# EUROPEAN PATENT APPLICATION

(11) **EP 4 583 444 A1**
(43) Date of publication of application: **09.07.2025**
(21) Application number: 23854315.1
(22) Date of filing: 10.08.2023
(51) Int. Cl.: H04L 5/00

(54) **METHOD AND APPARATUS FOR USE IN WIRELESS COMMUNICATION NODE**

(30) Priority: 15.08.2022 CN 202210973583
(71) Applicant: Apogee Networks, LLC, Dallas, TX 75201 (US)
(72) Inventor: WU, Keying, Shanghai 201206 (CN); WANG, Ping, Shanghai 201206 (CN); ZHANG, Xiaobo, Shanghai 201206 (CN)
(74) Representative: Laqua, Bernd Christian Kurt
(86) International application number: PCT/CN2023/112237
(87) International publication number: WO 2024/037413

(57) **Abstract**

The present application discloses a method and apparatus for use in a wireless communication node. The method comprises: a first node receiving first signaling, the first signaling being used for determining a first symbol set, and the first symbol set comprising at least one symbol; and sending a first signal in a first symbol subset, any symbol in the first symbol subset being a symbol in the first symbol set. A first symbol is a symbol in the first symbol set, and the first symbol being a first-type symbol. Whether the first symbol belongs to the first symbol subset is related to at least one of the following: whether the first node monitors a PDCCH in the first symbol; and whether the first signal is assigned in the first symbol at least one RE belonging to a first RE set, the first RE set comprising at least one RE. This method improves the utilization rate of system resources, improves the spectrum efficiency and reliability of uplink transmission, and reduces delay.

## Description

### Technical Field

The present application relates to transmission methods and apparatuses in wireless communication systems, in particular to transmission methods and apparatuses for wireless signals in wireless communication systems supporting cellular networks.

### Background Art

In the existing NR (New Radio) system, the spectrum resources are statically divided into FDD (Frequency Division Duplexing) spectrum and TDD (Time Division Duplexing) spectrum. For the TDD spectrum, both a base station and UE (User Equipment) operate in half-duplex mode. Such a half-duplex mode avoids self-interference and can mitigate the impact of cross-link interference, but also results in a decrease of resource utilization and an increase of latency. To address these problems, supporting flexible duplex modes or variable link directions (uplink or downlink or flexible) on the TDD spectrum or FDD spectrum becomes a possible solution. In the 3GPP (3rd Generation Partner Project) RAN (Radio Access Network) #88e meeting and the 3GPP R-18 workshop, supporting more flexible duplex modes or full duplex modes in NR R-18 has received widespread attention and discussion, especially the subband nonoverlapping full duplex (SBFD) mode at the gNB (NR Node B) end. Communications in this mode will suffer from serious interference, including self-interference and cross-link interference. To solve the interference problem, advanced interference cancellation technologies need to be adopted, including antenna isolation, beamforming, RF (Radio Frequency)-level interference cancellation, and digital interference cancellation.

### Summary of the Invention

In the SBFD scenario, spectrum assignment for uplink and downlink transmission will become more flexible. Through researches, the inventors found that in this scenario, existing transmission schemes need to be reconsidered.

In response to the above-mentioned problems, the present application discloses a solution. It should be noted that although the original intention of the present application is to target the SBFD scenario, the present application can also be applied to other non-SBFD scenarios. Further, the use of a unified design scheme for different scenarios (including but not limited to the SBFD scenario and other non-SBFD scenarios) will also help reduce hardware complexity and costs. In case of no conflict, the embodiments and features in the embodiments in any node of the present application can be applied to any other node. In case of no conflict, the embodiments and the features in the embodiments in the present application can be arbitrarily combined with each other.

As one embodiment, the explanation of the terminology in the present application refers to the definitions in the TS36 series of the specification protocol of 3GPP.

As one embodiment, the explanation of the terminology in the present application refers to the definitions in the TS38 series of the specification protocol of 3GPP.

As one embodiment, the explanation of the terminology in the present application refers to the definitions in the TS37 series of the specification protocol of 3GPP.

As one embodiment, the explanation of the terminology in the present application refers to the definitions in the specification protocol of IEEE (Institute of Electrical and Electronics Engineers).

The present application discloses a method for use in a first node for wireless communication, comprising:
receiving first signaling, the first signaling being used for determining a first symbol set, the first symbol set comprising at least one symbol, and
transmitting a first signal in a first symbol subset, any symbol in the first symbol subset being a symbol in the first symbol set,
wherein, a first symbol is a symbol in the first symbol set, the first symbol being a first-type symbol, and whether the first symbol belongs to the first symbol subset is related to at least one of the following:
   whether the first node monitors a PDCCH (Physical downlink control channel) in the first symbol; and
   whether the first signal is assigned in the first symbol at least one resource element (RE) belonging to a first RE set, the first RE set comprising at least one RE.

As one embodiment, the benefits of the above-mentioned method comprise: improving the utilization rate of uplink resources.

As one embodiment, the benefits of the above-mentioned method include: improving system performance in case of smaller changes to the current system.

Specifically, according to one aspect of the present application, the above-mentioned method is characterized by comprising:
receiving a first information block,
wherein, the first information block indicates which symbol or which symbols in the first symbol set is or are the first-type symbol(s).

As one embodiment, the benefits of the above-mentioned method comprise: having good compatibility.

Specifically, according to one aspect of the present application, the above-mentioned method is characterized by comprising:
receiving a second information block,
wherein, the second information block is used for determining whether the first node monitors the PDCCH in the first symbol.

Specifically, according to one aspect of the present application, the above-mentioned method is characterized by comprising:
receiving a third information block,
wherein, the third information block is used for determining the first RE set.

As one embodiment, the benefits of the above-mentioned method comprise: increased flexibility.

Specifically, according to one aspect of the present application, the above-mentioned method is characterized in that, the first symbol set comprises M symbols, M being a positive integer greater than 1; the third information block indicates M type sets, any type set in the M type sets comprising P types; the M type sets respectively comprise types of the M symbols in P subbands, P being a positive integer greater than 1, and the M type sets are used for determining the first RE set.

Specifically, according to one aspect of the present application, the above-mentioned method is characterized in that, only when a first condition is satisfied, whether the first symbol belongs to the first symbol subset is related to at least one of the following:
whether the first node monitors a PDCCH in the first symbol; and
whether the first signal is assigned in the first symbol at least one RE belonging to the first RE set.

Specifically, according to one aspect of the present application, the above-mentioned method is characterized in that, whether the first symbol belongs to the first symbol subset is related to whether the first signal is assigned in the first symbol at least one RE belonging to the first RE set; and when the first signal is assigned K REs belonging to the first RE set in the first symbol, whether the first symbol belongs to the first symbol subset is related to the K.

As one embodiment, the benefits of the above-mentioned method comprise: further reducing latency and improving system performance.

According to one aspect of the present application, the first node is user equipment.

According to one aspect of the present application, the first node is a relay node.

The present application discloses a method for use in a second node for wireless communication, comprising:
transmitting first signaling, the first signaling being used for determining a first symbol set, the first symbol set comprising at least one symbol, and
receiving a first signal in a first symbol subset, any symbol in the first symbol subset being a symbol in the first symbol set,
wherein, a first symbol is a symbol in the first symbol set, the first symbol being a first-type symbol, and whether the first symbol belongs to the first symbol subset is related to at least one of the following:
   whether a sender of the first signal monitors a PDCCH in the first symbol, and
   whether the first signal is assigned in the first symbol at least one RE belonging to the first RE set, the first RE set comprising at least one RE.

Specifically, according to one aspect of the present application, the above-mentioned method is characterized by comprising:
transmitting a first information block,
wherein, the first information block indicates which symbol or which symbols in the first symbol set is or are the first-type symbol(s).

Specifically, according to one aspect of the present application, the above-mentioned method is characterized by comprising:
transmitting a second information block,
wherein, the second information block is used for determining whether the sender of the first signal monitors the PDCCH in the first symbol.

Specifically, according to one aspect of the present application, the above-mentioned method is characterized by comprising:
transmitting a third information block,
wherein, the third information block is used for determining the first RE set.

Specifically, according to one aspect of the present application, the above-mentioned method is characterized in that, the first symbol set comprises M symbols, M being a positive integer greater than 1; the third information block indicates M type sets, any type set in the M type sets comprising P types; the M type sets respectively comprise types of the M symbols in P subbands, P being a positive integer greater than 1, and the M type sets are used for determining the first RE set.

Specifically, according to one aspect of the present application, the above-mentioned method is characterized in that, only when a first condition is satisfied, whether the first symbol belongs to the first symbol subset is related to at least one of the following:
whether the sender of the first signal monitors a PDCCH in the first symbol; and
whether the first signal is assigned in the first symbol at least one RE belonging to the first RE set.

Specifically, according to one aspect of the present application, the above-mentioned method is characterized in that, whether the first symbol belongs to the first symbol subset is related to whether the first signal is assigned in the first symbol at least one RE belonging to the first RE set; and when the first signal is assigned K REs belonging to the first RE set in the first symbol, whether the first symbol belongs to the first symbol subset is related to the K.

According to one aspect of the present application, the second node is a base station.

According to one aspect of the present application, the second node is user equipment.

According to one aspect of the present application, the second node is a relay node.

The present application discloses a first node for wireless communication, comprising:
a first receiver for receiving first signaling, the first signaling being used for determining a first symbol set, the first symbol set comprising at least one symbol, and
a first transmitter for transmitting a first signal in a first symbol subset, any symbol in the first symbol subset being a symbol in the first symbol set,
wherein, a first symbol is a symbol in the first symbol set, the first symbol being a first-type symbol, and whether the first symbol belongs to the first symbol subset is related to at least one of the following:
   whether the first node monitors a PDCCH in the first symbol; and
   whether the first signal is assigned in the first symbol at least one RE belonging to the first RE set, the first RE set comprising at least one RE.

The present application discloses a second node for wireless communication, comprising:
a second transmitter for transmitting first signaling, the first signaling being used for determining a first symbol set, the first symbol set comprising at least one symbol, and
a second receiver for receiving a first signal in a first symbol subset, any symbol in the first symbol subset being a symbol in the first symbol set,
wherein, a first symbol is a symbol in the first symbol set, the first symbol being a first-type symbol, and whether the first symbol belongs to the first symbol subset is related to at least one of the following:
   whether a sender of the first signal monitors a PDCCH in the first symbol, and
   whether the first signal is assigned in the first symbol at least one RE belonging to the first RE set, the first RE set comprising at least one RE.

As one embodiment, compared with the traditional solution, the present application has the following advantages:
the utilization rate of system resources is improved;
the spectrum efficiency and reliability of uplink transmission is improved, and the latency is reduced; and
the system performance is improved.

### Brief Description of the Drawings

Other features, objects and advantages of the present application will become more apparent by reading the detailed description of non-limiting embodiments with reference to the following drawings:
FIG. 1 shows a flowchart of first signaling and a first signal according to one embodiment of the present application;
FIG. 2 shows a schematic diagram of a network architecture according to one embodiment of the present application;
FIG. 3 shows a schematic diagram of an embodiment of a wireless protocol architecture of a user plane and a control plane according to one embodiment of the present application;
FIG. 4 shows a schematic diagram of a first communication device and a second communication device according to one embodiment of the present application;
FIG. 5 shows a first flowchart of transmission between a first node and a second node according to one embodiment of the present application;
FIG. 6 shows a second flowchart of transmission between a first node and a second node according to one embodiment of the present application;
FIG. 7 shows a third flowchart of transmission between a first node and a second node according to one embodiment of the present application;
FIG. 8 shows a fourth flowchart of transmission between a first node and a second node according to one embodiment of the present application;
FIG. 9 shows a schematic diagram of a third information block used for determining a first RE set according to one embodiment of the present application;
FIG. 10 shows a schematic diagram of a relationship among a first condition, a first symbol, and a first symbol subset according to one embodiment of the present application;
FIG. 11 shows a schematic diagram of a relationship among a first symbol, a first symbol subset, a first signal, and a first RE set according to one embodiment of the present application;
FIG. 12 shows a structural block diagram of a processing apparatus for a first node according to one embodiment of the present application; and
FIG. 13 shows a structural block diagram of a processing apparatus for a second node according to one embodiment of the present application.

### Detailed Description of Embodiments

The technical solution of the present application will be further described in detail below in conjunction with the accompanying drawings. It should be noted that the embodiments and features in the embodiments in the present application can be arbitrarily combined with each other in case of no conflict.

### Embodiment 1

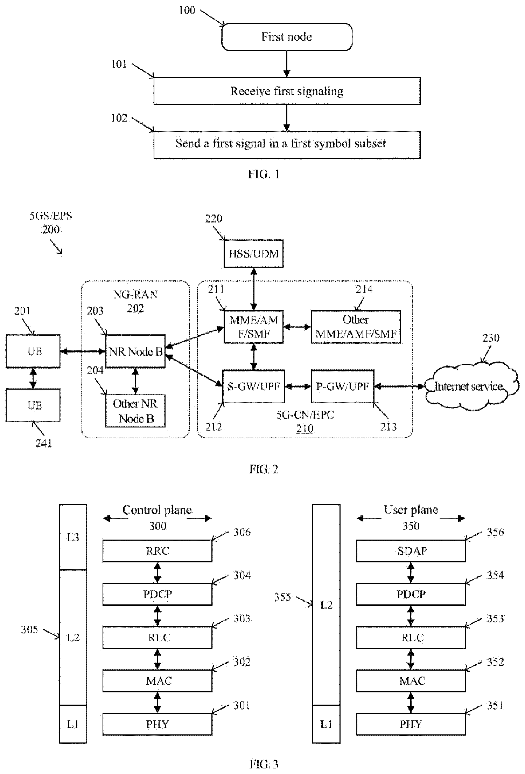

Embodiment 1 illustrates a flowchart of first signaling and a first signal according to one embodiment of the present application, as shown in FIG. 1. In FIG. 1, each block represents one step. In particular, the order of steps in the block does not represent a specific temporal sequence between various steps.

In step 101, a first node 100 receives first signaling, the first signaling being used for determining a first symbol set, the first symbol set comprising at least one symbol, and in step 102, a first signal is transmitted in a first symbol subset, any symbol in the first symbol subset being a symbol of the first symbol set.

In Embodiment 1, the first symbol is a symbol in the first symbol set, the first symbol being a first-type symbol, and whether the first symbol belongs to the first symbol subset is related to at least one of the following: whether the first node monitors the PDCCH in the first symbol; and whether the first signal is assigned in the first symbol at least one RE belonging to the first RE set, the first RE set comprising at least one RE.

As one embodiment, PDCCH refers to physical downlink control channel.

As one embodiment, the RE refers to Resource Element.

As one embodiment, the RE occupies a symbol in the time domain and a subcarrier in the frequency domain.

As one embodiment, the symbol comprises an OFDM (Orthogonal Frequency Division Multiplexing) symbol.

As one embodiment, the symbol comprises a DFT-S-OFDM (Discrete Fourier Transform Spread OFDM) symbol.

As one embodiment, the symbol is obtained by the output of the transform precoding undergoing the OFDM symbol generation.

As one embodiment, the first signaling comprises DCI (Downlink Control Information).

As one embodiment, the first signaling comprises at least one DCI field.

As one embodiment, the first signaling is DCI.

As one embodiment, the first signaling comprises RRC (Radio Resource Control) signaling.

As one embodiment, the first signaling is RRC signaling.

As one embodiment, the first signaling comprises MAC CE (Medium Access Control layer Control Element) signaling.

As one embodiment, the first signaling is MAC CE signaling.

As one embodiment, the first signaling comprises RRC signaling and DCI.

As one embodiment, the first signaling indicates the first symbol set.

As one embodiment, the first signaling indicates a start slot (time slot) occupied by the first symbol set, the start symbols occupied by the first symbol set in the start slot, and the number of symbols included by the first symbol set.

As one embodiment, the first signaling indicates a mapping type of DMRS (Demodulation reference signals) in the first symbol set.

As one embodiment, the first signaling indicates the number of repetitions in the first symbol set.

As one embodiment, the first signaling indicates the number of time slots in the first symbol set used for TBS (Transport blocks set) determination.

As one embodiment, the first signaling comprises DCI, and the DCI field *Time domain resource assignment* in the first signaling indicates the first symbol set.

As one embodiment, the first signaling comprises *ConfiguredGrantConfig* IE (Information element), and the *timeDomainAllocation* in the first signaling is used for indicating the first symbol set.

As one embodiment, the first signaling comprises *CSI*-*ReportConfig* IE, and the *reportSlotOffsetList* in the first signaling is used for indicating the first symbol set.

As one embodiment, the first signaling comprises *CSI*-*ReportConfig* IE, and *reportSlotOffsetListDCI-0-2* in the first signaling is used for indicating the first symbol set.

As one embodiment, the first signaling comprises *CSI*-*ReportConfig* IE, and *reportSlotOffsetListDCI-0-1* in the first signaling is used for indicating the first symbol set.

As one embodiment, the first signaling is used for scheduling the first signal.

As one embodiment, the first signaling comprises scheduling information of the first signal.

As one embodiment, the scheduling information comprises one or more of the following: time domain resources, frequency domain resources, MCS (Modulation and Coding Scheme), DMRS ports (Demodulation Reference Signal Ports), HARQ process number (Hybrid Automatic Repeat Request Process Number), TCI state (Transmission Configuration Indicator State), RV (Redundancy Version), NDI (New Data Indicator), antenna ports, and SRS request (Sounding Reference Signal Request).

As one embodiment, the time domain resource assigned to the first signal comprises the first symbol set.

As one embodiment, the first symbol set comprises the time domain resource assigned to the first signal.

As one embodiment, the first signaling indicates that the first symbol set is assigned to the first signal.

As one embodiment, the first signal carries one bit block, the one bit block comprises at least one TB (Transport Block) or at least one CBG (Code Block Group).

As one embodiment, the first signal comprises at least one CSI (Channel State Information) report.

As one embodiment, the first signal is a CSI report.

As one embodiment, the first signal is a plurality of CSI reports.

As one embodiment, the first signal is a PUSCH transmission based on repetition type B.

As one embodiment, the first signal is a PUSCH transmission based on dynamic scheduling.

As one embodiment, the first signal is a PUSCH transmission based on configured grant.

As one embodiment, the first signal is a PUSCH transmission based on dynamic scheduling of repetition type B.

As one embodiment, the first signal is a PUSCH transmission based on configured grant of repetition type B.

As one embodiment, the first node determines on its own whether to transmit the first signal in the first symbol set.

As one embodiment, the first higher-level parameter of the first node is configured as "*pusch-RepTypeB*", and the name of the first higher-level parameter comprises *"pusch-RepTypeIndicator*".

As one sub-embodiment of the above-mentioned embodiments, the first higher-level parameter is "*pusch-RepTypeIndicatorDCI-0-2*" *or* "*pusch-RepTypeIndicatorDCI-0-1*".

As one embodiment, the first symbol set is composed of the first symbol subset.

As one embodiment, the first symbol set comprises one symbol other than the first symbol subset.

As one embodiment, the first symbol set comprises a plurality of symbols other than the first symbol subset.

As one embodiment, the first symbol set comprises at least one nominal repetition.

As one embodiment, the first symbol subset does not comprise invalid symbols in the first symbol set.

As one embodiment, the meaning of whether the first symbol belongs to the first symbol subset comprises: whether the first symbol is an invalid symbol.

As one embodiment, if the first symbol is an invalid symbol, the first symbol does not belong to the first symbol subset; and if the first symbol is not an invalid symbol, the first symbol belongs to the first symbol subset.

As one embodiment, for any symbol in the first symbol set, if the any symbol belongs to the first symbol subset, the any symbol is not an invalid symbol.

As one embodiment, for any symbol in the first symbol set, if the any symbol does not belong to the first symbol subset, the any symbol is an invalid symbol.

As one embodiment, the first symbol subset comprises all symbols other than invalid symbols in the first symbol set.

As one embodiment, the first symbol subset comprises all or part of symbols other than invalid symbols in the first symbol set.

As one embodiment, the first symbol subset is composed of all symbols other than invalid symbols in the first symbol set.

As one embodiment, the first symbol subset is composed of all or part of symbols other than invalid symbols in the first symbol set.

As one embodiment, the first symbol set comprises N nominal repetitions, N being a positive integer; for any given nominal repetition among the N nominal repetitions, if the number of remaining symbols other than the invalid symbols in the given nominal repetition is greater than 0, the given nominal repetition comprises one or more actual repetitions, where each actual repetition comprises a set of continuous symbols within one slot in the remaining symbols.

As one sub-embodiment of the above-mentioned embodiments, the N is indicated by the first signaling.

As one sub-embodiment of the above-mentioned embodiments, the first symbol subset comprises all actual repetitions included in each of the N nominal repetitions.

As one sub-embodiment of the above-mentioned embodiments, the first symbol subset is composed of all actual repetitions included in all nominal repetitions in the first symbol set.

As one embodiment, the first symbol subset comprises at least one actual repetition.

As one embodiment, whether the first symbol is an invalid symbol is related to whether the first node monitors a PDCCH in the first symbol.

As one embodiment, whether the first symbol is an invalid symbol is related to whether the first signal is assigned in the first symbol at least one RE belonging to the first RE set.

As one embodiment, whether the first symbol is an invalid symbol is related to whether the first node monitors a PDCCH in the first symbol and whether the first signal is assigned in the first symbol at least one RE belonging to the first RE set.

As one embodiment, the first signal occupies only the first symbol subset in the first symbol set.

As one embodiment, the first signal does not occupy any symbol in the first symbol set that does not belong to the first symbol subset.

As one embodiment, the first signal occupies each symbol in the first symbol subset.

As one embodiment, the first signal occupies only part of the symbols in the first symbol subset.

As one embodiment, the first signal occupies the actual repetitions in the first symbol subset whose number of symbols per actual repetition is greater than 1.

As one embodiment, the first signal does not occupy the actual repetition in the first symbol subset whose number of symbols equals 1.

As one embodiment, the first symbol is any one of the first-type symbols in the first symbol set.

As one embodiment, the first-type symbol comprises: a symbol configured as downlink by *tdd-UL-DL-ConfigurationCommon.*

As one embodiment, the first-type symbol comprises: a symbol configured as downlink by *tdd-UL-DL-ConfigurationDedicated.*

As one embodiment, the first-type symbol comprises: a symbol configured as downlink by at least one of *tdd-UL-DL-ConfigurationCommon* or *tdd-UL-DL-ConfigurationDedicated.*

As one embodiment, the first-type symbol comprises: a symbol indicated for a CORESET (Control resource set) for a type0-PDCCH CSS (Common search space) set.

As one embodiment, the first-type symbol comprises: a symbol indicated for a CORESET indexed to 0.

As one embodiment, the first-type symbol comprises: a symbol indicated for the CORESET for the type0-PDCCH CSS set by *pdcch-ConfigSIB1* in *MIB* (Master Information Block).

As one embodiment, the first-type symbol comprises: a symbol indicated for the reception of SS (Synchronisation signal)/PBCH (Physical broadcast channel) blocks.

As one embodiment, the first-type symbol comprises: a symbol indicated for the reception of SS/PBCH blocks by *ssb-PositionsInBurst* in *SIB1* (System Information Block 1) or *ssb-PositionsInBurst* in *ServingCellConfigCommon.*

As one embodiment, the first-type symbol comprises: a symbol indicated as invalid by a higher-level parameter *invalidSymbolPattern.*

As one embodiment, the first-type symbol is a symbol configured as downlink by *tdd-UL-DL-ConfigurationCommon.*

As one embodiment, the first-type symbol is a symbol configured as downlink by *tdd-UL-DL-ConfigurationDedicated.*

As one embodiment, the first-type symbol is a symbol configured as downlink by at least one of *tdd-UL-DL-ConfigurationCommon* or *tdd-UL-DL-ConfigurationDedicated.*

As one embodiment, the first-type symbol is a symbol indicated for a CORESET for a type0-PDCCH CSS set.

As one embodiment, the first-type symbol is a symbol indicated for a CORESET indexed to 0.

As one embodiment, the first-type symbol is a symbol indicated for the CORESET for the type0-PDCCH CSS set by *pdcch-ConfigSIB1* in *MIB.*

As one embodiment, the first-type symbol is a symbol indicated for the reception of SS/PBCH blocks.

As one embodiment, the first-type symbol is a symbol indicated for the reception of SS/PBCH blocks by *ssb-PositionsInBurst* in *SIB1* or *ssb-PositionsInBurst* in *ServingCellConfigCommon.*

As one embodiment, the first-type symbol is a symbol indicated as invalid by a higher-level parameter *invalidSymbolPattern.*

As one embodiment, the first-type symbol comprises: a symbol configured as downlink by at least one of *tdd-UL-DL-ConfigurationCommon* or *tdd-UL-DL-ConfigurationDedicated,* and a symbol indicated for the CORESET for the type0-PDCCH CSS set.

As one embodiment, the first RE set comprises at least one RE.

As one embodiment, the first RE set is configurable.

As one embodiment, the first RE set is RRC-configured.

As one embodiment, the first RE set comprises at least one RB (Resource Block) in the frequency domain and at least one symbol in the time domain.

As one sub-embodiment of the above-mentioned embodiments, the at least one symbol is continuous.

As one sub-embodiment of the above-mentioned embodiments, the at least one symbol is discontinuous.

As one embodiment, the RB comprises a PRB (Physical RB, Physical Resource Block).

As one embodiment, the sender of the first signaling performs transmission in the first RE set and reception in the second RE set, and the second RE set and the first RE set occupy the same time domain resources and mutually orthogonal frequency domain resources.

As one embodiment, the first RE set is used for downlink transmission, the second RE set is used for uplink transmission, and the second RE set and the first RE set occupy the same time domain resources and mutually orthogonal frequency domain resources.

As one embodiment, the first RE set and the second RE set belong to the same serving cell.

As one embodiment, the first RE set and the second RE set belong to the same carrier.

As one embodiment, the frequency domain resources occupied by the first RE set and the second RE set belong to the same BWP (Bandwidth part).

As one embodiment, the meaning of the phrase "monitor a PDCCH" comprises: monitoring PDCCH candidates.

As one embodiment, the meaning of the phrase "monitor a PDCCH" comprises: detecting DCI by monitoring the PDCCH.

As one embodiment, the meaning of the phrase "monitor a PDCCH" comprises: detecting DCI by monitoring the PDCCH candidates.

As one embodiment, the meaning of the phrase "monitor a PDCCH" comprises: monitoring PDCCH candidates to determine whether DCI is transmitted in the PDCCH.

As one embodiment, the meaning of the phrase "monitor a PDCCH" comprises: performing a decoding operation; if the decoding is determined to be correct based on CRC (Cyclic Redundancy Check), determining that the PDCCH is detected; otherwise determining that PDCCH is not detected.

As one embodiment, the meaning of the phrase "monitor a PDCCH" comprises: determining whether DCI is transmitted in the PDCCH based on CRC, where whether DCI is transmitted in a PDCCH cannot be determined prior to determining whether the decoding is correct based on CRC.

As one embodiment, the monitoring for PDCCH is performed in PDCCH candidates.

As one embodiment, whether the first symbol belongs to the first symbol subset is related to whether the first node monitors a PDCCH in the first symbol.

As one embodiment, whether the first symbol belongs to the first symbol subset is related to whether the first signal is assigned in the first symbol at least one RE belonging to the first RE set.

As one embodiment, whether the first symbol belongs to the first symbol subset is related to whether the first node monitors a PDCCH in the first symbol and whether the first signal is assigned in the first symbol at least one RE belonging to the first RE set.

As one embodiment, whether the first node monitors a PDCCH in the first symbol is used for determining whether the first symbol belongs to the first symbol subset.

As one embodiment, whether the first signal is assigned in the first symbol at least one RE belonging to the first RE set is used for determining whether the first symbol belongs to the first symbol subset.

As one embodiment, whether the first node monitors a PDCCH in the first symbol and whether the first signal is assigned in the first symbol at least one RE belonging to the first RE set is collectively used for determining whether the first symbol belongs to the first symbol subset.

As one embodiment, whether the first symbol belongs to the first symbol subset depends on whether the first node monitors a PDCCH in the first symbol.

As one embodiment, whether the first symbol belongs to the first symbol subset depends on whether the first signal is assigned in the first symbol at least one RE belonging to the first RE set.

As one embodiment, the first node monitors a PDCCH in the first symbol, the first symbol not belonging to the first symbol subset.

As one embodiment, the first node does not monitor a PDCCH in the first symbol, the first symbol belonging to the first symbol subset.

As one embodiment, the first node does not monitor a PDCCH in the first symbol and the first symbol belongs to the first symbol subset; and alternatively, the first node monitors a PDCCH in the first symbol and the first symbol does not belong to the first symbol subset.

As one embodiment, when the first node monitors a PDCCH in the first symbol, the first symbol does not belong to the first symbol subset.

As one embodiment, when the first node does not monitor a PDCCH in the first symbol, the first symbol belongs to the first symbol subset.

As one embodiment, the first signal is not assigned a RE belonging to the first RE set in the first symbol, the first symbol belonging to the first symbol subset.

As one embodiment, the first signal is assigned at least one RE belonging to the first RE set in the first symbol, the first symbol not belonging to the first symbol subset.

As one embodiment, the first signal is not assigned a RE belonging to the first RE set in the first symbol and the first symbol belongs to the first symbol subset; and alternatively, the first signal is assigned at least one RE belonging to the first RE set in the first symbol and the first symbol does not belong to the first symbol subset.

As one embodiment, when the first signal is not assigned a RE belonging to the first RE set in the first symbol, the first symbol belongs to the first symbol subset.

As one embodiment, when the first signal is assigned at least one RE belonging to the first RE set in the first symbol, the first symbol does not belong to the first symbol subset.

As one embodiment, the first node does not monitor a PDCCH in the first symbol, the first signal is not assigned a RE belonging to the first RE set in the first symbol, and the first symbol belongs to the first symbol subset; alternatively, the first node monitors a PDCCH in the first symbol and the first symbol does not belong to the first symbol subset; and alternatively, the first signal is assigned at least one RE belonging to the first RE set in the first symbol and the first symbol does not belong to the first symbol subset.

As one embodiment, when the first node does not monitor a PDCCH in the first symbol, and the first signal is not assigned a RE belonging to the first RE set in the first symbol, the first symbol belongs to the first symbol subset; and when the first node monitors a PDCCH in the first symbol or the first signal is assigned at least one RE belonging to the first RE set in the first symbol, the first symbol does not belong to the first symbol subset.

As one embodiment, whether the first symbol belongs to the first symbol subset is related to whether the first node monitors, in the first symbol, PDCCH transmitted in the type0-PDCCH CSS set.

As one embodiment, the first node does not monitor, in the first symbol, PDCCH transmitted in the type0-PDCCH CSS set and the first symbol belongs to the first symbol subset.

As one embodiment, the first node monitors, in the first symbol, PDCCH transmitted in the type0-PDCCH CSS set and the first symbol does not belong to the first symbol subset.

As one embodiment, when the first node does not monitor, in the first symbol, PDCCH transmitted in the type0-PDCCH CSS set, the first symbol belongs to the first symbol subset.

As one embodiment, when the first node monitors, in the first symbol, PDCCH transmitted in the type0-PDCCH CSS set, the first symbol does not belong to the first symbol subset.

As one embodiment, whether the first symbol belongs to the first symbol subset is related to whether the first node monitors a PDCCH in the first symbol in the first cell, the first signal being transmitted in the first cell.

As one embodiment, the first node does not monitor a PDCCH in the first symbol in the first cell and the first symbol belongs to the first symbol subset.

As one embodiment, the first node monitors a PDCCH in the first symbol in the first cell and the first symbol does not belong to the first symbol subset.

As one embodiment, whether the first symbol belongs to the first symbol subset is related to whether the first node monitors a PDCCH in the first symbol in a second BWP, the first signal being transmitted in the first BWP, the first BWP being an uplink BWP, and the second BWP being a downlink BWP linked to the first BWP.

As one embodiment, if one downlink BWP is linked to one uplink BWP, the one downlink BWP and the one uplink BWP have the same BWP-id.

As one embodiment, if one downlink BWP is linked to one uplink BWP, the downlink BWP and the uplink BWP have the same center frequency.

As one embodiment, see 3GPP TS 38.213 for the specific meaning of the link between one downlink BWP and one uplink BWP.

As one embodiment, the first node does not monitor a PDCCH in the first symbol in the second BWP and the first symbol belongs to the first symbol subset.

As one embodiment, the first node monitors a PDCCH in the first symbol in the second BWP and the first symbol does not belong to the first symbol subset.

As one embodiment, the first signaling is transmitted on PDCCH.

As one embodiment, the first signaling is transmitted on PDSCH (Physical downlink shared channel).

As one embodiment, the first signal is transmitted on PUSCH.

As one embodiment, the first signal is transmitted on PUCCH (Physical uplink control channel).

### Embodiment 2

Embodiment 2 illustrates a schematic diagram of a network architecture according to one embodiment of the present application, as shown in FIG. 2.

FIG. 2 illustrates the network architecture of LTE (Long-Term Evolution), LTE-A (Long-Term Evolution Advanced) and future 5G systems. The network architecture of LTE, LTE-A and future 5G systems is called EPS (Evolved Packet System). 5G NR or LTE network architectures may be referred to as 5GS (5G System)/EPS 200 or some other suitable terms. The 5GSEPS 200 may comprise one or more UE (User Equipment) 201, UE 241 performing sidelink communication with the UE 201, NG-RAN (Next Generation Radio Access Network) 202, 5G-CN (5G Core Network)/EPC (Evolved Packet Core) 210, HSS (Home Subscriber Server)/UDM (Unified Data Management) 220, and Internet services 230. The 5GS/EPS 200 may be interconnected with other access networks, but these entities/interfaces are not shown for simplicity. As shown in FIG. 2, the 5GSEPS 200 provides packet switching services, however those skilled in the art will readily understand that various concepts presented throughout the present application can be extended to networks providing circuit switching services. The NG-RAN 202 comprises an NR Node B (gNB) 203 and other gNB 204. The gNB 203 provides user and control plane protocol termination toward the UE 201. The gNB 203 may be connected to other gNB 204 via an Xn interface (for example, backhaul). The gNB 203 may also be referred to as a base station, a base transceiver station, a radio base station, a radio transceiver, a transceiver function, a basic service set (BSS), an extended service set (ESS), a TRP (Transmitter Receiver Point) or some other suitable terms. The gNB 203 provides the UE 201 with access points to the 5G-CN/EPC 210. Examples of the UE 201 comprise cellular telephones, smart phones, Session Initiation Protocol (SIP) telephones, laptops, personal digital assistants (PDAs), satellite radios, global positioning systems, multimedia apparatuses, video apparatuses, digital audio players (for example, MP3 players), cameras, game consoles, drones, aircraft, narrowband physical network devices, machine type communication devices, land vehicles, automobiles, wearable devices, or any other similar functional apparatuses. Those skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The gNB 203 is connected to the SG-CN/EPC 210 through an S1/NG interface. The 5G-CN/EPC 210 comprises MME (Mobility Management Entity)/AMF (Authentication Management Field)/SMF (Session Management Function) 211, other MME/AMF/SMF 214, S-GW (Service Gateway)/UPF (User Plane Function) 212, and P-GW (Packet Data Network Gateway)/UPF 213. The MME/AMF/SMF 211 is a control node that processes signaling between the UE 201 and the 5G-CN/EPC 210. Generally, the MME/AMF/SMF 211 provides bearer and connection management. All user IP (Internet Protocol) packets are transmitted through the S-GW/UPF 212, and the S-GW/UPF 212 itself is connected to the P-GW/UPF 213. The P-GW provides UE IP address assignment and other functions. The P-GW /UPF 213 is connected to the Internet services 230. The Internet services 230 comprise the operator's corresponding Internet protocol services, which may specifically comprise the Internet, intranets, IMS (IP Multimedia Subsystem) and packet switching services.

As one embodiment, the first node in the present application comprises the UE 201.

As one embodiment, the second node in the present application comprises the gNB 203.

As one embodiment, the wireless link between the UE 201 and the gNB 203 comprises a cellular network link.

As one embodiment, the sender of the first signaling comprises the gNB 203.

As one embodiment, the recipient of the first signaling comprises the UE 201.

As one embodiment, the sender of the first information block comprises the gNB 203.

As one embodiment, the recipient of the first information block comprises the UE 201.

As one embodiment, the sender of the second information block comprises the gNB 203.

As one embodiment, the recipient of the second information block comprises the UE 201.

As one embodiment, the sender of the third information block comprises the gNB 203.

As one embodiment, the recipient of the third information block comprises the UE 201.

As one embodiment, the sender of the first signal comprises the UE 201.

As one embodiment, the recipient of the first signal comprises the gNB 203.

As one embodiment, the gNB 203 supports SBFD.

As one embodiment, the gNB 203 supports more flexible duplex modes or full duplex modes.

As one embodiment, the UE 201 supports SBFD.

As one embodiment, the UE 201 supports more flexible duplex modes or full duplex modes.

### Embodiment 3

Embodiment 3 illustrates a schematic diagram of an embodiment of a wireless protocol architecture of a user plane and a control plane according to one embodiment of the present application, as shown in FIG. 3.

FIG. 3 is a schematic diagram illustrating an embodiment of a radio protocol architecture used for a user plane 350 and a control plane 300. FIG. 3 presents the radio protocol architecture of the control plane 300 which is used between a first communication node device (UE or RSU (Road Side Unit) in V2X (Vehicle to Everything), onboard devices, or onboard communication modules) and a second node device (gNB, UE, or RSU in V2X, onboard devices, or onboard communication modules), or between two pieces of UE using three layers: Layer 1 (L1), Layer 2 (L2), and Layer 3 (L3). L1 is the lowest layer and implements various PHY (physical layer) signal processing functions. L1 is referred to herein as PHY 301. L2 305 is above the PHY 301 and is responsible for the link between the first node device and the second node device, or between two pieces of UE through the PHY 301. L2 305 comprises a MAC sublayer 302, an RLC (Radio Link Control) sublayer 303, and a PDCP (Packet Data Convergence Protocol) sublayer 304, which terminate at the second node device. The PDCP sublayer 304 provides multiplexing between different radio bearers and logical channels. The PDCP sublayer 304 also provides security through packet data encryption, and provides handover support between the second communication node device and the first communication node device. The RLC sublayer 303 provides segmentation and reassembly of upper layer data packets, retransmission of lost data packets, and reordering of data packets to compensate for disordered reception caused by HARQ. The MAC sublayer 302 provides multiplexing between logical channels and transport channels. The MAC sublayer 302 is also responsible for allocating various radio resources (for example, resource blocks) in a cell among the first communication node devices. The MAC sublayer 302 is also responsible for HARQ operations. The RRC sublayer 306 in L3 in the control plane 300 is responsible for obtaining radio resources (for example, radio bearers) and configuring the lower layer using RRC signaling between the second communication node device and the first communication node device. The radio protocol architecture of the user plane 350 comprises Layer 1 (L1) and Layer 2 (L2). Regarding the radio protocol architecture used between the first communication node device and the second communication node device in the user plane 350, the physical layer 351, a PDCP sublayer 354 in L2 355, an RLC sublayer 353 in L2 355 and a MAC sublayer 352 in L2 355 are generally the same as the corresponding layers and sublayers in the control plane 300, but the PDCP sublayer 354 also provides header compression for upper layer data packets to reduce radio transmission overhead. L2 355 in the user plane 350 also comprises an SDAP (Service Data Adaptation Protocol) sublayer 356, and the SDAP sublayer 356 is responsible for mapping between QoS (Quality of Service) streams and data radio bearers (DRB) to support service diversity. Although not shown, the first communication node device may have several upper layers above L2 355, comprising a network layer (for example, IP layer) terminated at P-GW on the network side and an application layer terminated at the other end of the connection (for example, a remote UE, server, etc.).

As one embodiment, the wireless protocol architecture in FIG. 3 is applicable to the first node in the present application.

As one embodiment, the wireless protocol architecture in FIG. 3 is applicable to the second node in the present application.

As one embodiment, the first signaling is generated in the RRC sublayer 306 or the MAC sublayer 302.

As one embodiment, the first signal is generated in the PHY 301 or the PHY 351.

As one embodiment, the first information block is generated in the RRC sublayer 306 or the MAC sublayer 302.

As one embodiment, the second information block is generated in the RRC sublayer 306 or the MAC sublayer 302.

As one embodiment, the third information block is generated in the RRC sublayer 306 or the MAC sublayer 302.

As one embodiment, the higher level in the present application refers to a layer above the physical layer.

### Embodiment 4

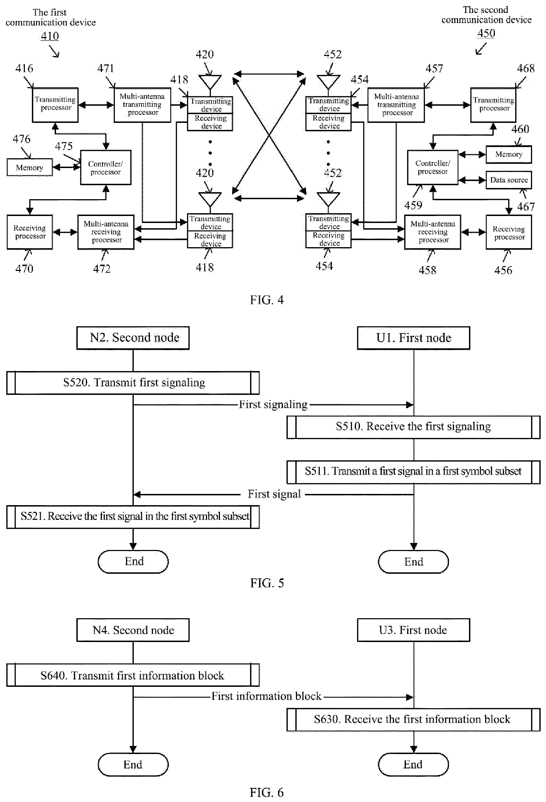

Embodiment 4 illustrates a schematic diagram of a first communication device and a second communication device according to one embodiment of the present application, as shown in FIG. 4. FIG. 4 is a block diagram of the first communication device 410 and the second communication device 450 that communicate with each other in the access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In the transmission from the first communication device 410 to the second communication device 450, at the first communication device 410, upper layer data packets from the core network are provided to the controller/processor 475. The controller/processor 475 implements the functionality of L2. In DL, the controller/processor 475 provides header compression, encryption, packet segmentation and reordering, multiplexing between logical channels and transport channels, and radio resource assignment of the second communication device 450 based on various priority metrics. The controller/processor 475 is also responsible for HARQ operations, retransmission of lost packets, and signaling to the second communication device 450. The transmitting processor 416 and the multi-antenna transmitting processor 471 implement various signal processing functions for L1 (that is, the physical layer). The transmitting processor 416 implements encoding and interleaving to facilitate forward error correction (FEC) at the second communication device 450, and mapping of signal clusters based on various modulation schemes (for example, Binary Phase Shift Keying (BPSK), Quadrature Phase Shift Keying (QPSK), M-Phase Shift Keying (M-PSK), and M-Quadrature Amplitude Modulation (M-QAM)). The multi-antenna transmitting processor 471 performs digital spatial precoding of the encoded and modulated symbols, comprising codebook-based precoding and non-codebook-based precoding and beamforming processing, to generate one or more parallel streams. The transmitting processor 416 then maps each parallel stream to a subcarrier, multiplexes the modulated symbols with a reference signal (for example, pilot) in the time domain and/or frequency domain, and then uses Inverse Fast Fourier Transform (IFFT) to generate a physical channel carrying the time domain multi-carrier symbol stream. The multi-antenna transmitting processor 471 then performs transmit analog precoding/beamforming operations on the time domain multi-carrier symbol stream. Each transmitting device 418 converts the baseband multi-carrier symbol stream provided by the multi-antenna transmitting processor 471 into a radio frequency stream, and then provides it to different antennas 420.

In the transmission from the first communication device 410 to the second communication device 450, at the second communication device 450, each receiving device 454 receives a signal through its corresponding antenna 452. Each receiving device 454 recovers information modulated to the radio frequency carrier and converts the radio frequency stream into a baseband multi-carrier symbol stream to provide it to the receiving processor 456. The receiving processor 456 and the multi-antenna receiving processor 458 implement various signal processing functions of L1. The multi-antenna receiving processor 458 performs receiving analog precoding/beamforming operations on the baseband multi-carrier symbol stream from the receiving device 454. The receiving processor 456 uses Fast Fourier Transform (FFT) to convert the baseband multi-carrier symbol stream from the time domain to the frequency domain after the receiving analog precoding/beamforming operations. In the frequency domain, the physical layer data signals and the reference signals are demultiplexed by the receiving processor 456, where the reference signals are used for channel estimation, and the data signals undergo multi-antenna detection in the multi-antenna receiving processor 458 to recover any parallel streams destined for the second communication device 450. Symbols on each parallel stream are demodulated and recovered in the receiving processor 456, and soft decisions are generated. The receiving processor 456 then decodes and deinterleaves the soft decisions to recover upper layer data and control signals transmitted by the first communication device 410 on the physical channel. The upper layer data and control signals are then provided to the controller/processor 459. The controller/processor 459 implements the functions of L2. The controller/processor 459 may be associated with a memory 460 storing program codes and data. The memory 460 may be referred to as a computer-readable medium. In DL, the controller/processor 459 provides demultiplexing between transport channels and logical channels, packet reassembly, decryption, header decompression, and control signal processing to recover upper layer data packets from the core network. The upper layer data packets are then provided to all protocol layers above L2. Various control signals may also be provided to L3 for L3 processing. The controller/processor 459 is also responsible for error detection using Acknowledgement (ACK) and/or Negative Acknowledgement (NACK) protocols to support HARQ operations.

In the transmission from the second communication device 450 to the first communication device 410, at the second communication device 450, the data source 467 is used for providing upper layer data packets to the controller/processor 459. The data source 467 represents all protocol layers above L2. Similar to the transmission function at the first communication device 410 as described for the DL, the controller/processor 459 implements header compression, encryption, packet segmentation and reordering, and multiplexing between logical channels and transport channels based on wireless resource assignment of the first communication device 410, thereby implementing L2 functions for the user plane and the control plane. The controller/processor 459 is also responsible for HARQ operations, retransmission of lost packets, and signaling to the first communication device 410. The transmitting processor 468 performs modulation mapping and channel encoding processing, and the multi-antenna transmitting processor 457 performs digital multi-antenna spatial precoding, including codebook-based precoding and non-codebook-based precoding, and beamforming processing. The transmitting processor 468 modulates the resulting parallel streams into multi-carrier/single-carrier symbol streams. These streams undergo analog precoding/beamforming operations in the multi-antenna transmitting processor 457 before being provided to different antennas 452 via transmitting device 454. Each transmitting device 454 first converts baseband symbol streams provided from the multi-antenna transmitting processor 457 into radio frequency symbol streams, and then provides the radio frequency symbol streams to the antenna 452.

In the transmission from the second communication device 450 to the first communication device 410, the function at the first communication device 410 is similar to the reception function at the second communication device 450 as described for the transmission from the first communication device 410 to the second communication device 450. Each receiving device 418 receives the radio frequency signals through its corresponding antenna 420, converts the received radio frequency signals into baseband signals, and provides the baseband signals to the multi-antenna receiving processor 472 and the receiving processor 470. The receiving processor 470 and the multi-antenna receiving processor 472 jointly implement the function of L1. The controller/processor 475 implements L2 functions. The controller/processor 475 may be associated with a memory 476 storing program codes and data. The memory 476 may be referred to as a computer-readable medium. The controller/processor 475 provides demultiplexing between transmission channels and logical channels, packet reassembly, decryption, header decompression, and control signal processing to recover upper layer data packets from the second communication device 450. The upper layer data packets from the controller/processor 475 may be provided to the core network. The controller/processor 475 is also responsible for error detection using ACK and/or NACK protocols to support HARQ operations.

As one embodiment, the second communication device 450 comprises: at least one processor and at least one memory, the at least one memory comprising computer program codes. The at least one memory and the computer program codes are configured to be used together with the at least one processor. The second communication device 450 receives at least the first signaling, the first signaling being used for determining a first symbol set, the first symbol set comprising at least one symbol, and transmits a first signal in a first symbol subset, any symbol in the first symbol subset being a symbol in the first symbol set, wherein, a first symbol is a symbol in the first symbol set, the first symbol being a first-type symbol, and whether the first symbol belongs to the first symbol subset is related to at least one of the following: whether the first node monitors the PDCCH in the first symbol; and whether the first signal is assigned in the first symbol at least one RE belonging to the first RE set, the first RE set comprising at least one RE.

As one embodiment, the second communication device 450 comprises: a memory storing a computer-readable instruction program that generates an action when executed by at least one processor, the action comprising: receiving first signaling; and transmitting a first signal in a first symbol subset.

As one embodiment, the first communication device 410 comprises: at least one processor and at least one memory, the at least one memory comprising computer program codes. The at least one memory and the computer program codes are configured to be used together with the at least one processor. The first communication device 410 apparatus transmits at least the first signaling, the first signaling being used for determining a first symbol set, the first symbol set comprising at least one symbol, and receives a first signal in a first symbol subset, any symbol in the first symbol subset being a symbol in the first symbol set, wherein, a first symbol is a symbol in the first symbol set, the first symbol being a first-type symbol, and whether the first symbol belongs to the first symbol subset is related to at least one of the following: whether a sender of the first signal monitors a PDCCH in the first symbol; and whether the first signal is assigned in the first symbol at least one RE belonging to the first RE set, the first RE set comprising at least one RE.

As one embodiment, the first communication device 410 comprises a memory storing a computer-readable instruction program that generates an action when executed by at least one processor, the action comprising: transmitting first signaling and receiving a first signal in a first symbol subset.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first signaling.

As one embodiment, at least one of {the antenna 420, the transmitting device 418, the transmitting processor 416, the multi-antenna transmitting processor 471, the controller/processor 475, and the memory 476} is used for transmitting the first signaling.

As one embodiment, at least one of {the antenna 452, the receiving device 454, the receiving processor 456, the multi-antenna receiving processor 458, the controller/processor 459, the memory 460, and the data source 467} is used for transmitting the first signal.

As one embodiment, at least one of {the antenna 420, the transmitting device 418, the transmitting processor 416, the multi-antenna transmitting processor 471, the controller/processor 475, and the memory 476} is used for receiving the first signal.

### Embodiment 5

Embodiment 5 illustrates a first flowchart of transmission between a first node and a second node according to one embodiment of the present application. In FIG. 5, communication is performed between the first node U1 and the second node N2 through a wireless link. It is particularly noted that the order in the present embodiment does not limit the order of signal transmission and the order of implementation in the present application. In case of no conflict, the embodiments, sub-embodiments and dependent embodiments in Embodiment 5 can be applied to any embodiment in Embodiment 6, Embodiment 7 and Embodiment 8. On the contrary, in case of no conflict, any embodiment, sub-embodiment and dependent embodiment in Embodiment 6, Embodiment 7 and Embodiment 8 can be applied to Embodiment 5.

For the first node U1, in step S510, first signaling is received; and in step S511, a first signal is transmitted in a first symbol subset.

For the second node N2, in step S520, first signaling is transmitted; and in step S521, a first signal is received in a first symbol subset.

In Embodiment 5, the first signaling is used for determining a first symbol set, the first symbol set comprising at least one symbol; any symbol in the first symbol subset is a symbol in the first symbol set; a first symbol is a symbol in the first symbol set, the first symbol being a first-type symbol; and whether the first symbol belongs to the first symbol subset is related to at least one of the following: whether the first node monitors the PDCCH in the first symbol; and whether the first signal is assigned in the first symbol at least one RE belonging to the first RE set, the first RE set comprising at least one RE.

As one embodiment, the first node U1 is the first node in the present application.

As one embodiment, the second node N2 is the second node in the present application.

As one embodiment, an air interface between the second node N2 and the first node U1 comprises a wireless interface between a base station device and user equipment.

As one embodiment, an air interface between the second node N2 and the first node U1 comprises a wireless interface between a relay node device and user equipment.

As one embodiment, an air interface between the second node N2 and the first node U1 comprises a wireless interface between user equipment and user equipment.

As one embodiment, the first signaling is transmitted on PDCCH.

As one embodiment, the first signaling is transmitted on PDSCH.

As one embodiment, the first signal is transmitted on PUSCH.

As one embodiment, the first signal is transmitted on PUCCH.

### Embodiment 6

Embodiment 6 illustrates a second flowchart of transmission between a first node and a second node according to one embodiment of the present application. In FIG. 6, communication is performed between the first node U3 and the second node N4 through a wireless link. It is particularly noted that the order in the present embodiment does not limit the order of signal transmission and the order of implementation in the present application. In case of no conflict, the embodiments, sub-embodiments and dependent embodiments in Embodiment 6 can be applied to any embodiment in Embodiment 5, Embodiment 7 and Embodiment 8. On the contrary, in case of no conflict, any embodiment, sub-embodiment and dependent embodiment in Embodiment 5, Embodiment 7 and Embodiment 8 can be applied to Embodiment 6.

The first node U3 receives a first information block in step S630.

The first node N4 transmits a first information block in step S640.

In Embodiment 6, the first information block indicates which symbol or which symbols in the first symbol set is or are the first-type symbol.

As one embodiment, the first information block is carried by higher-level signaling.

As one embodiment, the first information block is carried by RRC signaling.

As one embodiment, the first information block is carried by MAC CE signaling.

As one embodiment, the first information block comprises all or part of the information in an RRC IE.

As one embodiment, the first information block is carried by a higher-level parameter *tdd-UL-DL-ConfigurationCommon.*

As one embodiment, the first information block is carried by a higher-level parameter *tdd-UL-DL-ConfigurationDedicated.*

As one embodiment, the first information block comprises information in a *tdd-UL-DL-ConfigurationCommon* field of *ServingCellConfigCommonSIB* IE.

As one embodiment, the first information block comprises information in a *tdd-UL-DL-ConfigurationDedicated* field of *ServingCellConfig* IE.

As one embodiment, the first information block comprises information in a tdd-UL-DL-ConfigurationCommon field of *ServingCellConfigCommon* IE.

As one embodiment, the first information block is carried by a *tdd-UL-DL-ConfigurationCommon* field of *ServingCellConfigCommonSIB* IE.

As one embodiment, the first information block is carried by a *tdd-UL*-*DL-ConfigurationDedicated* field of *ServingCellConfig* IE.

As one embodiment, the first information block is carried by a *tdd-UL-DL-ConfigurationCommon* field of *ServingCellConfigCommon* IE.

As one embodiment, the first information block is used for determining the type of each symbol in the first symbol set.

As one embodiment, the first information block indicates the type of each symbol in the first symbol set.

As one embodiment, the types of the symbols comprise downlink and uplink.

As one embodiment, the types of the symbols comprise downlink, uplink and flexible.

As one embodiment, the type of any symbol in the first symbol set is downlink or uplink.

As one embodiment, the type of any symbol in the first symbol set is one of downlink, uplink, or flexible.

As one embodiment, the first information block indicates a period of each symbol type in the first symbol set.

As one embodiment, the first information block indicates the number of time slots comprising only downlink symbols in the first symbol set.

As one sub-embodiment of the above-mentioned embodiments, the type of each symbol in the time slots comprising only downlink symbols is downlink.

As one embodiment, the first information block indicates the number of time slots comprising only uplink symbols in the first symbol set.

As one sub-embodiment of the above-mentioned embodiments, the type of each symbol in the time slots comprising only uplink symbols is uplink.

As one embodiment, the first information block indicates the number of continuous downlink symbols included from the first time slot after the last time slot comprising only downlink symbols in the first symbol set.

As one embodiment, the first information block indicates the number of continuous uplink symbols included at the end of the last slot before the first time slot comprising only uplink symbols in the first symbol set.

As one embodiment, the first symbol set comprises at least one symbol other than the uplink symbol and the downlink symbol indicated by the first information block.

As one sub-embodiment of the above-mentioned embodiments, the type of the at least one symbol comprises flexible.

As one sub-embodiment of the above-mentioned embodiments, the type of the at least one symbol is flexible.

As one embodiment, the first information block indicates a start symbol occupied by continuous downlink symbols in any time slot in the first symbol set.

As one sub-embodiment of the above-mentioned embodiments, any time slot in the first symbol set comprises at least one symbol other than the continuous downlink symbols.

As one sub-embodiment of the above-mentioned embodiments, the type of the at least one symbol is flexible.

As one sub-embodiment of the above-mentioned embodiments, the type of the symbol included in any time slot in the first symbol set is downlink or flexible.

As one embodiment, the first information block indicates the last symbol occupied by the continuous uplink symbols in any time slot in the first symbol set.

As one sub-embodiment of the above-mentioned embodiments, any time slot in the first symbol set comprises at least one symbol other than the continuous uplink symbols.

As one sub-embodiment of the above-mentioned embodiments, the type of the at least one symbol is flexible.

As one sub-embodiment of the above-mentioned embodiments, the type of the symbol included in any time slot in the first symbol set is uplink or flexible.

As one embodiment, the first-type symbol comprises symbols whose type indicated by the first information block is downlink.

As one embodiment, the first information block is carried by *MIB.*

As one embodiment, the first information block is carried by a higher-level parameter *pdcch-ConfigSIB1.*

As one embodiment, the first information block comprises information in the *pdcch-ConfigSIB1* field of*MIB*.

As one embodiment, the first information block is carried by *a pdcch-ConfigSIB1* field in the *MIB.*

As one embodiment, the first information block indicates a symbol for CORESET of type0-PDCCH CSS.

As one embodiment, the first information block indicates the starting RB, the number of continuous RBs and the number of continuous symbols in the first symbol set for CORESET of type0-PDCCH CSS.

As one embodiment, the first information block indicates occasions for monitoring PDCCH in the first symbol set.

As one embodiment, the first information block indicates a time slot in the first symbol set for monitoring type0-PDCCH and a first symbol in the time slot for CORESET.

As one embodiment, the first information block indicates the number of search space sets in each time slot in the first symbol set.

As one embodiment, the first-type symbol comprises symbols indicated for CORESET of type0-PDCCH CSS.

As one embodiment, the first information block is carried by a higher-level parameter *invalidSymbolPattern.*

As one embodiment, the first information block comprises information in an *invalidSymbolPattern* field of *PUSCH-Config* IE.

As one embodiment, the first information block is carried by an *invalidSymbolPattern* field of *PUSCH*-*Config* IE.

As one embodiment, the first information block indicates an invalid symbol for PUSCH transmission based on repetition type B.

As one embodiment, the first information block comprises 14 bits, the 14 bits correspond one by one to the 14 symbols of each slot in the first symbol set, and the symbols corresponding to the bits equal to 1 in the 14 bits are indicated as invalid symbols.

As one embodiment, the first information block comprises 28 bits, the first 14 bits of the 28 bits correspond one by one to the 14 symbols of each odd time slot in the first symbol set, the last 14 bits of the 28 bits correspond one by one to the 14 symbols of each even time slot in the first symbol set, and the symbols corresponding to bits equal to 1 in the 28 bits are indicated as invalid symbols.

As one embodiment, the first information block indicates a period of invalid symbols for PUSCH transmission based on repetition type B.

As one sub-embodiment of the above-mentioned embodiments, the first information block indicates invalid symbols on the each cycle.

As one embodiment, the first-type symbol comprises symbols indicated as invalid by the first information block.

As one embodiment, the first information block is carried by *SIB1.*

As one embodiment, the first information block is carried by *ServingCellConfigCommon* IE.

As one embodiment, the first information block is carried by an *ssb-PositionsInBurst* field of *SIB1.*

As one embodiment, the first information block is carried by an *ssb-PositionsInBurst* field of *ServingCellConfigCommon* IE.

As one embodiment, the first-type symbol comprises symbols for SS/PBCH block reception indicated by the first information block.

As one embodiment, the first information block indicates symbols for SS/PBCH block reception.

As one embodiment, the first information block is transmitted in PDSCH.

As one embodiment, the first information block is transmitted in PBCH.

As one embodiment, the step S640 is after step S520 and before step S521 in Embodiment 5.

As one embodiment, the step S630 is after step S510 and before step S511 in Embodiment 5.

As one embodiment, the step S640 occurs simultaneously with step S520 in Embodiment 5.

As one embodiment, the step S630 occurs simultaneously with step S510 in Embodiment 5.

### Embodiment 7

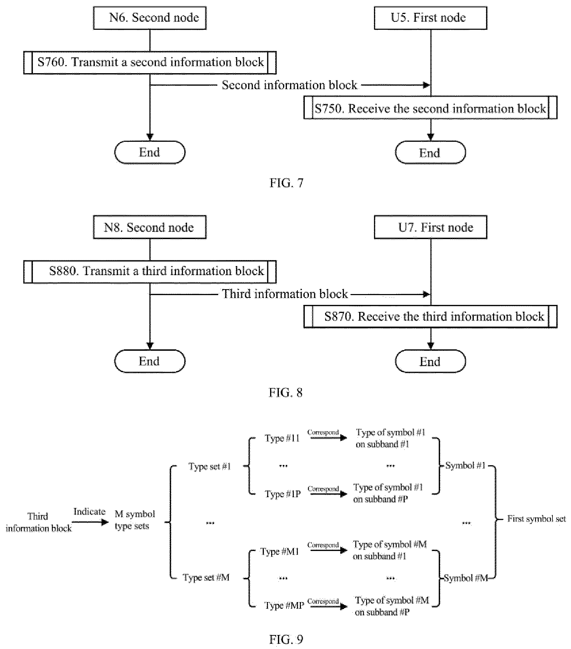

Embodiment 7 illustrates a third flowchart of transmission between a first node and a second node according to one embodiment of the present application. In FIG. 7, communication is performed between the first node U5 and the second node N6 through a wireless link. It is particularly noted that the order in the present embodiment does not limit the order of signal transmission and the order of implementation in the present application. In case of no conflict, the embodiments, sub-embodiments and dependent embodiments in Embodiment 7 can be applied to any embodiment in Embodiment 5, Embodiment 6 and Embodiment 8. On the contrary, in case of no conflict, any embodiment, sub-embodiment and dependent embodiment in Embodiment 5, Embodiment 6 and Embodiment 8 can be applied to Embodiment 7.

The first node U5 receives a second information block in step S750.

The first node N6 transmits a second information block in step S760.

In Embodiment 7, the second information block is used for determining whether the first node monitors a PDCCH in the first symbol.

As one embodiment, the second information block is carried by RRC signaling.

As one embodiment, the second information block is carried by MAC CE signaling.

As one embodiment, the second information block is carried by a DCI.

As one embodiment, the second information block comprises all or part of the information in at least one RRC IE.

As one embodiment, the second information block is jointly carried by RRC signaling and MAC CE.

As one embodiment, the second information block is jointly carried by RRC signaling and DCI.

As one embodiment, the second information block is jointly carried by RRC signaling, MAC CE, and DCI.

As one embodiment, the second information block comprises information in *MIB.*

As one embodiment, the second information block comprises information in *a pdcch-ConfigSIB1* field of *MIB.*

As one embodiment, the second information block comprises information in *PDCCH-ConfigCommon* IE.

As one embodiment, the second information block comprises information in at least one of a *controlResourceSetZero* field, a *commonControlResourceSet* field, a *searchSpaceZero* field, or a *commonSearchSpaceList* field of *PDCCH-ConfigCommon* IE.

As one embodiment, the second information block comprises information in RAR (Random access response).

As one embodiment, the second information block comprises information in DCI with CRC scrambled by RA-RNTI (Random Access Radio Network Temporary Identity).

As one embodiment, the second information block comprises information in PDSCH scheduled by DCI with CRC scrambled by RA-RNTI.

As one embodiment, the second information block comprises information in DCI with CRC scrambled by RA-RNTI and information in PDSCH scheduled by DCI with CRC scrambled by RA-RNTI.

As one embodiment, the second information block comprises information in *PDCCH-Config* IE.

As one embodiment, the second information block comprises information in at least one of a *controlResourceSetToAddModList* field, a *controlResourceSetToReleaseList* field, a *searchSpacesToAddModList* field, or a *searchSpacesToReleaseList* field of *PDCCH-Config* IE.

As one embodiment, the second information block comprises information in the TCI state indication for UE-specific PDCCH MAC CE.

As one sub-embodiment of the above-mentioned embodiments, the TCI is: Transmission Configuration Indicator.

As one embodiment, the second information block comprises information in the enhanced TCI state indication for UE-specific PDCCH MAC CE.

As one embodiment, the second information block comprises information in DCI.

As one embodiment, the second information block comprises information in DCI indicating a TCI state.

As one embodiment, the second information block is used for configuring CORESET.

As one embodiment, the second information block is used for configuring the search space set.

As one embodiment, the second information block is used for determining the QCL (Quasi co-location) relationship of CORESET indexed to 0.

As one embodiment, the second information block is used for determining on which symbols the first node monitors a PDCCH.

As one embodiment, the second information block is transmitted in PDSCH.

As one embodiment, the second information block is transmitted in PBCH.

As one embodiment, the second information block is transmitted in PDCCH.

As one embodiment, the step S760 is after step S520 and before step S521 in Embodiment 5.

As one embodiment, the step S750 is after step S510 and before step S511 in Embodiment 5.

As one embodiment, the step S760 occurs simultaneously with step S520 in Embodiment 5.

As one embodiment, the step S750 occurs simultaneously with step S510 in Embodiment 5.

### Embodiment 8

Embodiment 8 illustrates a fourth flowchart of transmission between a first node and a second node according to one embodiment of the present application, as shown in FIG. 8. In FIG. 8, communication is performed between the first node U7 and the second node N8 through a wireless link. It is particularly noted that the order in the present embodiment does not limit the order of signal transmission and the order of implementation in the present application. In case of no conflict, the embodiments, sub-embodiments and dependent embodiments in Embodiment 8 can be applied to any embodiment in Embodiment 5, Embodiment 6 and Embodiment 7. On the contrary, in case of no conflict, any embodiment, sub-embodiment and dependent embodiment in Embodiment 5, Embodiment 6 and Embodiment 7 can be applied to Embodiment 8.

The first node U7 receives a third information block in step S870.

The first node N8 transmits a third information block in step S880.

In Embodiment 8, the third information block is used for determining the first RE set.

As one embodiment, the third information block is carried by higher-level signaling.

As one embodiment, the third information block is carried by RRC signaling.

As one embodiment, the third information block is carried by MAC CE signaling.

As one embodiment, the third information block comprises all or part of the information in at least one RRC IE.

As one embodiment, the third information block is carried by DCI.

As one embodiment, the third information block is carried by a higher-level parameter *tdd-UL-DL-ConfigurationCommon.*

As one embodiment, the third information block is carried by a higher-level parameter *tdd-UL-DL-ConfigurationDedicated.*

As one embodiment, the third information block comprises information in a *tdd-UL-DL-ConfigurationCommon* field of *ServingCellConfigCommonSIB* IE.

As one embodiment, the third information block comprises information in a *tdd-UL-DL-ConfigurationDedicated* field of *ServingCellConfig* IE.

As one embodiment, the third information block comprises information in a *tdd-UL-DL-ConfigurationCommon* field of *ServingCellConfigCommon* IE.

As one embodiment, the third information block is carried by a *tdd-UL-DL-ConfigurationCommon* field of *ServingCellConfigCommonSIB* IE.

As one embodiment, the third information block is carried by a *tdd-UL-DL-ConfigurationDedicated* field of *ServingCellConfig* IE.

As one embodiment, the third information block is carried by a *tdd-UL-DL-ConfigurationCommon* field of *ServingCellConfigCommon* IE.

As one embodiment, the third information block is carried by a second higher-level parameter.

As one embodiment, the name of the second higher-level parameter comprises *"invalidSymbolPattern".*

As one embodiment, the second higher-level parameter is *"invalidSymbolPattern".*

As one embodiment, the second higher-level parameter is indicated by an *invalidSymbolPattern* field of *PUSCH-Config IE.*

As one embodiment, the third information block comprises information in an *invalidSymbolPattern* field of *PUSCH-Config* IE.

As one embodiment, the third information block is carried by an *invalidSymbolPattern* field of *PUSCH-Config* IE.

As one embodiment, the third information block indicates the first RE set.

As one embodiment, the third information block indicates symbols and subcarriers occupied by each RE in the first RE set.

As one embodiment, the third information block indicates a second symbol set and a first RB set; the second symbol set and the first RB set are used for determining the first RE set; and the second symbol set comprises at least one symbol, the first RB set comprising at least one RB.

As one sub-embodiment of the above-mentioned embodiments, any RE in the first RE set occupies one symbol in the second symbol set in the time domain and one sub-carrier in the first RB set in the frequency domain.

As one sub-embodiment of the above-mentioned embodiments, the third information block comprises a first bit map, the first bit map comprises W bits, the W bits respectively correspond to W symbols, and W is a positive integer greater than 1; for any given bit in the first bit map, if the given bit is equal to 1, the symbol corresponding to the given bit belongs to the second symbol set; and if the given bit is equal to 0, the symbol corresponding to the given bit does not belong to the second symbol set.

As one sub-embodiment of the above-mentioned embodiments, the third information block comprises a second bit map, the second bit map comprises V bits, the V bits respectively correspond to V RBs, and V is a positive integer greater than 1; for any given bit in the second bit map, if the given bit is equal to 1, the RB corresponding to the given bit belongs to the first RB set; and if the given bit is equal to 0, the RB corresponding to the given bit does not belong to the first RB set.

As one embodiment, the third information block is transmitted in PDSCH.

As one embodiment, the third information block is transmitted in PDCCH.

As one embodiment, the step S880 is after step S520 and before step S521 in Embodiment 5.

As one embodiment, the step S870 is after step S510 and before step S511 in Embodiment 5.

As one embodiment, the step S880 occurs simultaneously with step S520 in Embodiment 5.

As one embodiment, the step S870 occurs simultaneously with step S510 in Embodiment 5.

### Embodiment 9

Embodiment 9 illustrates a schematic diagram in which a third information block according to one embodiment of the present application is used for determining a first RE set, as shown in FIG. 9. In FIG. 9, the first symbol set comprises M symbols, where M is a positive integer greater than 1; the third information block indicates M type sets, any type set in the M type sets comprising P types; the M type sets respectively comprise types of the M symbols in P subbands, P being a positive integer greater than 1, and the M type sets are used for determining the first RE set. In FIG. 9, symbol #1 to symbol #M respectively represent the M symbols, type set #1 to type set #M respectively represent the M type sets, type #11 to type #1P respectively represent the P types in type set #1, and type #M1 to type #MP respectively represent the P types in type set #M.

As one embodiment, the M type sets correspond one by one to the M symbols; A given type set is any type set in the M type sets, and the given type set corresponds to a given symbol in the M symbols; the P types included in the given type set are respectively the types of the given symbols on the P subbands.

As one embodiment, the first symbol set is composed of the M symbols.

As one embodiment, the first symbol set comprises at least one symbol other than the M symbols.

As one sub-embodiment of the above-mentioned embodiments, the type of any symbol in the first symbol set that does not belong to the M symbols is downlink across all P subbands.

As one sub-embodiment of the above-mentioned embodiments, the type of any symbol in the first symbol set that does not belong to the M symbols is downlink or flexible on any subband of the P subbands.

As one embodiment, the P subbands are configurable.

As one embodiment, the P subbands are RRC-configured.

As one embodiment, the P subbands are default.

As one embodiment, the P subbands are predefined.

As one embodiment, the P subbands do not need to be configured.

As one embodiment, any subband of the P subbands comprises one or more RBs for the same transmission direction.

As one embodiment, any subband of the P subbands comprises one or more continuous RBs for the same transmission direction.

As one embodiment, the transmission direction comprises uplink and downlink.

As one embodiment, the transmission direction comprises uplink, downlink and sidelink.

As one embodiment, at least one subband of the P subbands comprises 1 or more RBs for downlink.

As one embodiment, there are two subbands in the P subbands, each comprising 1 or more RBs for downlink.

As one embodiment, at least one subband of the P subbands comprises 1 or more RBs for uplink.

As one embodiment, one and only one subband of the P subbands comprises 1 or more RBs for uplink.

As one embodiment, the P is equal to 2.

As one embodiment, the P is greater than 2.

As one embodiment, the P subbands are pairwise orthogonal to each other in the frequency domain.

As one embodiment, there is a guard band between any two adjacent subbands of the P subbands.

As one embodiment, the P subbands belong to the same BWP.

As one embodiment, the P subbands belong to the same serving cell.

As one embodiment, the first signal is transmitted in a first BWP, and the P subbands belong to the first BWP.

As one embodiment, the first signal is transmitted in a first BWP, the first BWP is an uplink BWP, a second BWP is a downlink BWP linked to the first BWP, and the P subbands belong to the second BWP.

As one embodiment, for any given symbol in the M symbols, the sender of the first signaling performs, on the given symbol, reception on part of the subbands in the P subbands and transmission on another part of the subbands in the P subbands.

As one embodiment, any symbol in the M symbols is used for uplink transmission on part of the subbands in the P subbands and for downlink transmission on another part of the subbands in the P subbands.

As one embodiment, any type in the M type sets is uplink or downlink.

As one embodiment, any type in the M type sets is one of uplink, downlink or flexible.

As one embodiment, the P types included in any type set in the M type sets have at least one uplink and at least one downlink.

As one embodiment, the type of any symbol in the M symbols is downlink on at least one subband in the P subbands, and is uplink on at least another subband in the P subbands.

As one embodiment, there are two symbols in the M symbols whose types are different on the same subband in the P subbands.

As one embodiment, the types of any two symbols in the M symbols are the same on any subband in the P subbands.

As one embodiment, the type of any symbol in the M symbols is uplink on the first subband, and is downlink on any subband other than the first subband in the P subbands; and the first subband is one of the P subbands.

As one embodiment, the type of any symbol in the M symbols is uplink on the first subband, and is downlink or flexible on any subband other than the first subband in the P subbands; and the first subband is one of the P subbands.

As one embodiment, which types in the M type sets are downlink are used for determining the first RE set.

As one embodiment, the first RE occupies a first given symbol in the time domain and a first given subcarrier in the frequency domain; the first given symbol is one of the M symbols, and the first given subcarrier belongs to a first given subband in the P subbands; and when the type of the first given symbol is downlink on the first given subband, the first RE belongs to the first RE set.

As one sub-embodiment of the above-mentioned embodiments, the first RE is any RE that occupies a symbol belonging to the M symbols, and occupies a sub-carrier belonging to one subband in the P subbands.

As one sub-embodiment of the above-mentioned embodiments, when and only when the type of the first given symbol is downlink on the first given subband, the first RE belongs to the first RE set.

As one sub-embodiment of the above-mentioned embodiments, when the type of the first given symbol is downlink or flexible on the first given subband, the first RE belongs to the first RE set.

As one sub-embodiment of the above-mentioned embodiments, when the type of the first given symbol is uplink on the first given subband, the first RE does not belong to the first RE set.

As one embodiment, the type of any symbol in the M symbols is uplink on only the first subband in the P subbands, and the first subband is one of the P subbands; and the first RE set is composed of REs that occupy one symbol in the M symbols in the time domain and occupy one sub-carrier in any subband other than the first subband in the P subbands in the frequency domain.

### Embodiment 10

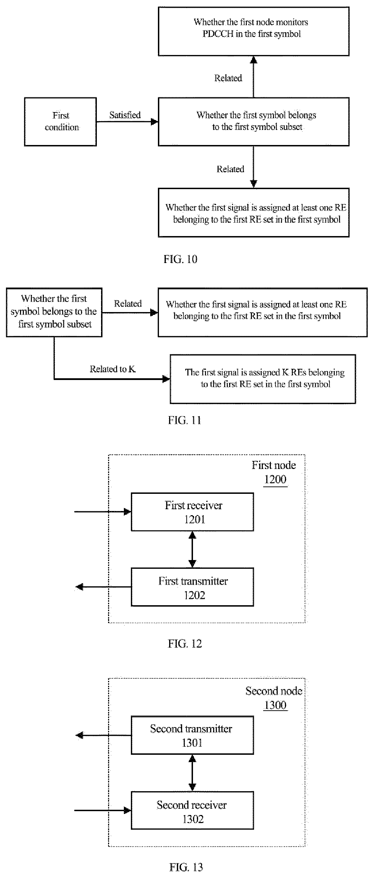

Embodiment 10 illustrates a schematic diagram of the relationship among a first condition, a first symbol, and a first symbol subset according to one embodiment of the present application, as shown in FIG. 10. In FIG. 10, only when a first condition is satisfied, whether the first symbol belongs to the first symbol subset is related to at least one of the following: whether the first node monitors a PDCCH in the first symbol; and whether the first signal is assigned in the first symbol at least one RE belonging to the first RE set.

As one embodiment, the first condition comprises: the first node is configured with a third higher-level parameter.

As one embodiment, the first condition comprises: the first node is configured with a third higher-level parameter set as a first parameter value.

As one embodiment, when the first node is configured with the third higher-level parameter, the first condition is satisfied.

As one embodiment, when the first node is not configured with the third higher-level parameter, the first condition is not satisfied.

As one embodiment, when the first node is configured with the third higher-level parameter set as the first parameter value, the first condition is satisfied.

As one embodiment, when the first node is not configured with the third higher-level parameter, or the value of the third higher-level parameter configured to the first node is not equal to the first parameter value, the first condition is not satisfied.

As one embodiment, the third higher-level parameter is related to the capability of the first node.

As one embodiment, whether the third higher-level parameter is configured is related to the capability of the first node.

As one embodiment, the value of the third higher-level parameter is related to the capability of the first node.

As one embodiment, the third higher-level parameter is used for determining whether the first node supports more flexible duplex modes or full duplex modes.

As one embodiment, the third higher-level parameter is used for determining whether the first node supports the subband full duplex mode.

As one embodiment, the third higher-level parameter is used for determining whether the first node supports a symbol configured with different types on different frequency domain resources.

As one embodiment, the third higher-level parameter is used for determining whether the first node supports a symbol configured as uplink and downlink respectively on different frequency domain resources.

As one embodiment, the first parameter value comprises: enabled.

As one embodiment, the first condition comprises: there is at least one symbol in the first symbol set belonging to a first time pool.

As one embodiment, when there is at least one symbol in the first symbol set belonging to the first time pool, the first condition is satisfied.

As one embodiment, when each symbol in the first symbol set does not belong to the first time pool, the first condition is not satisfied.

As one embodiment, the first time pool comprises a plurality of symbols.

As one embodiment, there are two adjacent symbols discontinuous in the time domain in the first time pool.

As one embodiment, the first time pool is configurable.

As one embodiment, the first time pool is RRC-configured.

As one embodiment, the first time pool is default.

As one embodiment, the first time pool is predefined.

As one embodiment, the first time pool does not need to be configured.

As one embodiment, the sender of the first signaling simultaneously supports uplink transmission and downlink transmission in any symbol in the first time pool.

As one embodiment, the sender of the first signaling simultaneously performs transmission and reception in any symbol in the first time pool.

As one embodiment, the first time pool comprises symbols capable of simultaneously performing uplink transmission and downlink transmission within the first time pool.

As one embodiment, the first time pool is composed of symbols capable of simultaneously performing uplink transmission and downlink transmission within the first time pool.

As one embodiment, the first time pool comprises symbols simultaneously used for uplink transmission and downlink transmission.

As one embodiment, the first time pool is composed of symbols simultaneously used for uplink transmission and downlink transmission.

As one embodiment, the first time pool is configured by higher-level parameters.

As one embodiment, the first time pool is configured by *tdd-UL-DL-ConfigurationCommon.*

As one embodiment, the first time pool is configured by *tdd-UL-DL-ConfigurationDedicated.*

As one embodiment, the first time pool comprises symbols configured as downlink.

As one embodiment, the first time pool comprises symbols configured as downlink by *tdd-UL-DL-ConfigurationCommon.*

As one embodiment, the first time pool comprises symbols configured as downlink by *tdd-UL-DL-ConfigurationDedicated.*

As one embodiment, the first time pool comprises symbols configured as flexible.

As one embodiment, the first time pool comprises symbols configured as flexible by tdd-UL-DL-ConfigurationCommon.

As one embodiment, the first time pool comprises symbols configured as flexible by *tdd-UL-DL-ConfigurationDedicated.*

As one embodiment, the first time pool comprises symbols configured as a first type, the first type being different from downlink, uplink and flexible.

As one embodiment, the first time pool comprises symbols configured as a first type by *tdd-UL-DL-ConfigurationDedicated,* the first type being different from downlink, uplink and flexible.

As one embodiment, the M symbols all belong to the first time pool.

As one embodiment, the first symbol set comprises at least one symbol that does not belong to the M symbols; and any symbol in the first symbol set that does not belong to the M symbols does not belong to the first time pool.

As one embodiment, the first time pool is configured by *tdd-UL-DL-ConfigurationCommon,* and the third information block is configured by *dd-UL-DL-ConfigurationDedicated.*

As one sub-embodiment of the above-mentioned embodiments, the first time pool comprises symbols configured as flexible by *tdd-UL-DL-ConfigurationCommon.*

As one embodiment, the first condition comprises: there is at least one symbol in the first symbol set that does not belong to a second time pool.

As one embodiment, when there is at least one symbol in the first symbol set that does not belong to a second time pool, the first condition is satisfied.

As one embodiment, when each symbol in the first symbol set belongs to the second time pool, the first condition is not satisfied.

As one embodiment, the second time pool comprises a plurality of symbols.

As one embodiment, there are two adjacent symbols discontinuous in the time domain in the second time pool.

As one embodiment, the second time pool is configurable.

As one embodiment, the second time pool is RRC-configured.

As one embodiment, the second time pool is default.

As one embodiment, the second time pool is predefined.

As one embodiment, the second time pool does not need to be configured.

As one embodiment, the sender of the first signaling supports only uplink transmission or only downlink transmission in any symbol in the second time pool.

As one embodiment, the sender of the first signaling performs only transmission or only reception in any symbol in the second time pool.

As one embodiment, the sender of the first signaling only supports downlink transmission in any symbol in the second time pool.

As one embodiment, the sender of the first signaling performs only transmission in any symbol in the second time pool.

As one embodiment, any symbol in the second time pool is used only for uplink transmission or only for downlink transmission.

As one embodiment, any symbol in the second time pool is used only for downlink transmission.

As one embodiment, any symbol in the second time pool is used only for a single transmission direction.

As one embodiment, the second time pool comprises symbols that are used only for uplink transmission and symbols that are used only for downlink transmission.

As one embodiment, the second time pool comprises symbols used only for downlink transmission.

As one embodiment, the second time pool is composed of symbols that are used only for uplink transmission and symbols that are used only for downlink transmission.

As one embodiment, the second time pool is composed of symbols that are used only for downlink transmission.

As one embodiment, the second time pool is configured by higher-level parameters.

As one embodiment, the second time pool is configured by *tdd-UL-DL-ConfigurationCommon.*

As one embodiment, the second time pool is configured by *tdd-UL-DL-ConfigurationDedicated.*

As one embodiment, the second time pool comprises symbols configured as downlink.

As one embodiment, the second time pool comprises symbols configured as downlink by *tdd-UL-DL-ConfigurationCommon.*

As one embodiment, the second time pool comprises symbols configured as downlink by *tdd-UL-DL-ConfigurationDedicated.*

As one embodiment, the second time pool comprises symbols configured as uplink.

As one embodiment, the second time pool comprises symbols configured as uplink by *tdd-UL-DL-ConfigurationCommon.*

As one embodiment, the second time pool comprises symbols configured as uplink by *tdd-UL-DL-ConfigurationDedicated.*

As one embodiment, none of the M symbols belong to the second time pool.

As one embodiment, the first symbol set comprises at least one symbol that does not belong to the M symbols; and any symbol in the first symbol set that does not belong to the M symbols belongs to the first time pool.

As one embodiment, the third information block is used for determining the second time pool.

As one embodiment, only when the first condition is satisfied, whether the first symbol belongs to the first symbol subset is related to whether the first node monitors a PDCCH in the first symbol.

As one embodiment, only when the first condition is satisfied, whether the first symbol belongs to the first symbol subset is related to whether the first signal is assigned in the first symbol at least one RE belonging to the first RE set.

As one embodiment, only when the first condition is satisfied, whether the first symbol belongs to the first symbol subset is related to whether the first node monitors a PDCCH in the first symbol and whether the first signal is assigned in the first symbol at least one RE belonging to the first RE set.

As one embodiment, only when the first condition is satisfied, whether the first node monitors a PDCCH in the first symbol is used for determining whether the first symbol belongs to the first symbol subset.

As one embodiment, only when the first condition is satisfied, whether the first signal is assigned in the first symbol at least one RE belonging to the first RE set is used for determining whether the first symbol belongs to the first symbol subset.

As one embodiment, only when the first condition is satisfied, whether the first node monitors a PDCCH in the first symbol and whether the first signal is assigned in the first symbol at least one RE belonging to the first RE set is collectively used for determining whether the first symbol belongs to the first symbol subset.

As one embodiment, only when the first condition is satisfied, whether the first symbol belongs to the first symbol subset depends on whether the first node monitors a PDCCH in the first symbol.

As one embodiment, only when the first condition is satisfied, whether the first symbol belongs to the first symbol subset depends on whether the first signal is assigned in the first symbol at least one RE belonging to the first RE set.

As one embodiment, only when the first condition is satisfied, the first node does not monitor a PDCCH in the first symbol and the first symbol belongs to the first symbol subset, or the first node monitors a PDCCH in the first symbol and the first symbol does not belong to the first symbol subset.

As one embodiment, only when the first condition is satisfied, the first signal is not assigned a RE belonging to the first RE set in the first symbol and the first symbol belongs to the first symbol subset, or the first signal is assigned at least one RE belonging to the first RE set in the first symbol and the first symbol does not belong to the first symbol subset.

As one embodiment, when the first condition is satisfied, whether the first symbol belongs to the first symbol subset is related to whether the first node monitors a PDCCH in the first symbol.

As one embodiment, when the first condition is satisfied, whether the first symbol belongs to the first symbol subset is related to whether the first signal is assigned in the first symbol at least one RE belonging to the first RE set.

As one embodiment, when the first condition is satisfied, whether the first symbol belongs to the first symbol subset is related to whether the first node monitors a PDCCH in the first symbol and whether the first signal is assigned in the first symbol at least one RE belonging to the first RE set.

As one embodiment, when the first condition is satisfied, whether the first symbol belongs to the first symbol subset depends on whether the first node monitors a PDCCH in the first symbol.

As one embodiment, when the first condition is satisfied, whether the first symbol belongs to the first symbol subset depends on whether the first signal is assigned in the first symbol at least one RE belonging to the first RE set.

As one embodiment, when the first condition is satisfied, the first node does not monitor a PDCCH in the first symbol and the first symbol belongs to the first symbol subset, or the first node monitors a PDCCH in the first symbol and the first symbol does not belong to the first symbol subset.

As one embodiment, when the first condition is satisfied, the first signal is not assigned a RE belonging to the first RE set in the first symbol and the first symbol belongs to the first symbol subset, or the first signal is assigned at least one RE belonging to the first RE set in the first symbol and the first symbol does not belong to the first symbol subset.

As one embodiment, when the first condition is not satisfied, the first symbol does not belong to the first symbol subset.

As one embodiment, when the first condition is not satisfied, any of the first-type symbol in the first symbol set does not belong to the first symbol subset.

As one embodiment, when the first condition is not satisfied, whether the first node monitors a PDCCH in the first symbol is not used for determining whether the first symbol belongs to the first symbol subset.

As one embodiment, when the first condition is not satisfied, whether the first signal is assigned in the first symbol at least one RE belonging to the first RE set is not used for determining whether the first symbol belongs to the first symbol subset.

As one embodiment, when the first condition is not satisfied, whether the first symbol belongs to the first symbol subset does not depend on whether the first node monitors a PDCCH in the first symbol.

As one embodiment, when the first condition is not satisfied, whether the first symbol belongs to the first symbol subset does not depend on whether the first signal is assigned in the first symbol at least one RE belonging to the first RE set.

As one embodiment, when the first condition is not satisfied, the first symbol does not belong to the first symbol subset regardless of whether the first node monitors a PDCCH in the first symbol.

As one embodiment, when the first condition is not satisfied, the first symbol does not belong to the first symbol subset regardless of whether the first signal is assigned in the first symbol at least one RE belonging to the first RE set.

### Embodiment 11

Embodiment 11 illustrates a schematic diagram of the relationship among between a first symbol, a first symbol subset, a first signal, and a first RE set according to one embodiment of the present application, as shown in FIG. 11. In FIG. 11, whether the first symbol belongs to the first symbol subset is related to whether the first signal is assigned in the first symbol at least one RE belonging to the first RE set; and when the first signal is assigned K REs belonging to the first RE set in the first symbol, whether the first symbol belongs to the first symbol subset is related to the K.

As one embodiment, the K is a positive integer.

As one embodiment, when the first signal is assigned K REs belonging to the first RE set in the first symbol, the K is used for determining whether the first symbol belongs to the first symbol subset.

As one embodiment, when the first signal is assigned K REs belonging to the first RE set in the first symbol, whether the first symbol belongs to the first symbol subset depends on the K.

As one embodiment, when the K is greater than the first threshold, the first symbol does not belong to the first symbol subset; and when the K is not greater than the first threshold, the first symbol belongs to the first symbol subset.

As one embodiment, when the K is not less than a first threshold, the first symbol does not belong to the first symbol subset; and when the K is less than the first threshold, the first symbol belongs to the first symbol subset.

As one embodiment, the K is greater than a first threshold and the first symbol does not belong to the first symbol subset; and alternatively, the K is not greater than the first threshold value and the first symbol belongs to the first symbol subset.

As one embodiment, the K is not less than a first threshold value and the first symbol does not belong to the first symbol subset; and alternatively, the K is less than the first threshold value and the first symbol belongs to the first symbol subset.

As one embodiment, the first threshold is a positive integer greater than 1.

As one embodiment, when the ratio of the K to the total number of REs assigned to the first signal on the first symbol is greater than a first threshold, the first symbol does not belong to the first symbol subset; and when the ratio of the K to the total number of REs assigned to the first signal on the first symbol is not greater than the first threshold value, the first symbol belongs to the first symbol subset.

As one embodiment, when the ratio of the K to the total number of REs assigned to the first signal on the first symbol is not less than a first threshold, the first symbol does not belong to the first symbol subset; and when the ratio of the K to the total number of REs assigned to the first signal on the first symbol is less than the first threshold, the first symbol belongs to the first symbol subset.

As one embodiment, the total number of REs assigned to the first signal on the first symbol is related to the total number of subcarriers assigned to the first signal on the first symbol.

As one embodiment, the first threshold is a non-negative real number less than 1.

As one embodiment, the first threshold is configurable.

As one embodiment, the first threshold is RRC-configured.

As one embodiment, the first threshold is configured by MAC CE.

As one embodiment, the first threshold is default.

As one embodiment, the first threshold is predefined.

As one embodiment, the first threshold is indicated by DCI.

As one embodiment, the first signaling is used for determining the first threshold.

As one embodiment, the first signaling indicates the first threshold.

As one embodiment, when the first signal is assigned the K REs belonging to the first RE set in the first symbols and the first symbol belongs to the first symbol subset, the first signal does not occupy the K REs.

As one sub-embodiment of the above-mentioned embodiments, the K REs are invalid for the first signal.

As one sub-embodiment of the above-mentioned embodiments, the first signal performs rate matching on the K REs.

As one sub-embodiment of the above-mentioned embodiments, the first signal performs puncturing on the K REs.

As one embodiment, the TBS of the TB carried by the first signal is independent of the K.

### Embodiment 12

Embodiment 12 illustrates a structural block diagram of a processing apparatus for a first node according to one embodiment of the present application, as shown in FIG. 12. In FIG. 12, the processing apparatus 1200 in the first node comprises a first receiver 1201 and a first transmitter 1202.

The first receiver 1201 receives first signaling; and the first transmitter 1202 transmits a first signal in a first symbol subset.

In Embodiment 12, the first signaling is used for determining a first symbol set, the first symbol set comprising at least one symbol; any symbol in the first symbol subset is a symbol in the first symbol set; a first symbol is a symbol in the first symbol set, the first symbol being a first-type symbol; and whether the first symbol belongs to the first symbol subset is related to at least one of the following: whether the first node monitors the PDCCH in the first symbol; and whether the first signal is assigned in the first symbol at least one RE belonging to the first RE set, the first RE set comprising at least one RE.

As one embodiment, the first receiver 1201 receives a first information block; and the first information block indicates which symbol or which symbols in the first symbol set is or are the first-type symbol.

As one embodiment, the first receiver 1201 receives a second information block; and the second information block is used for determining whether the first node monitors a PDCCH in the first symbol.

As one embodiment, the first receiver 1201 receives a third information block; and the third information block is used for determining the first RE set.

As one embodiment, the first symbol set comprises M symbols, M being a positive integer greater than 1; the third information block indicates M type sets, any type set in the M type sets comprising P types; the M type sets respectively comprise types of the M symbols in P subbands, P being a positive integer greater than 1, and the M type sets are used for determining the first RE set.

As one embodiment, only when a first condition is satisfied, whether the first symbol belongs to the first symbol subset is related to at least one of the following: whether the first node monitors a PDCCH in the first symbol; and whether the first signal is assigned in the first symbol at least one RE belonging to the first RE set.

As one embodiment, whether the first symbol belongs to the first symbol subset is related to whether the first signal is assigned in the first symbol at least one RE belonging to the first RE set; and when the first signal is assigned K REs belonging to the first RE set in the first symbol, whether the first symbol belongs to the first symbol subset is related to the K.

As one embodiment, the first node is user equipment.

As one embodiment, the first node is a relay node device.

As one embodiment, the first receiver 1201 comprises at least one of {an antenna 452, a receiving device 454, a receiving processor 456, a multi-antenna receiving processor 458, a controller/processor 459, a memory 460, and a data source 467} in Embodiment 4.

As one embodiment, the first transmitter 1202 comprises at least one of {an antenna 452, a transmitting device 454, a transmitting processor 468, a multi-antenna transmitting processor 457, a controller/processor 459, a memory 460, and a data source 467} in Embodiment 4.

### Embodiment 13

Embodiment 13 illustrates a structural block diagram of a processing apparatus for a second node according to one embodiment of the present application, as shown in FIG. 13. In FIG. 13, the processing apparatus 1300 in the second node comprises a second transmitter 1301 and a second receiver 1302.

In Embodiment 13, the second transmitter 1301 transmits first signaling; and the second receiver 1302 receives a first signal in a first symbol subset.

In Embodiment 13, the first signaling is used for determining a first symbol set, the first symbol set comprising at least one symbol; any symbol in the first symbol subset is a symbol in the first symbol set; a first symbol is a symbol in the first symbol set, the first symbol being a first-type symbol; and whether the first symbol belongs to the first symbol subset is related to at least one of the following: whether a sender of the first signal monitors a PDCCH in the first symbol; and whether the first signal is assigned in the first symbol at least one RE belonging to the first RE set, the first RE set comprising at least one RE.

As one embodiment, the second transmitter 1301 transmits a first information block; and the first information block indicates which symbol or which symbols in the first symbol set is or are the first-type symbol.

As one embodiment, the second transmitter 1301 transmits a second information block; and the second information block is used for determining whether the sender of the first signal monitors a PDCCH in the first symbol.

As one embodiment, the second transmitter 1301 transmits a third information block; and the third information block is used for determining the first RE set.

As one embodiment, the first symbol set comprises M symbols, M being a positive integer greater than 1; the third information block indicates M type sets, any type set in the M type sets comprising P types; the M type sets respectively comprise types of the M symbols in P subbands, P being a positive integer greater than 1, and the M type sets are used for determining the first RE set.

As one embodiment, only when the first condition is satisfied, whether the first symbol belongs to the first symbol subset is related to at least one of the following: whether the sender of the first signal monitors a PDCCH in the first symbol; and whether the first signal is assigned in the first symbol at least one RE belonging to the first RE set.

As one embodiment, whether the first symbol belongs to the first symbol subset is related to whether the first signal is assigned in the first symbol at least one RE belonging to the first RE set; and when the first signal is assigned K REs belonging to the first RE set in the first symbol, whether the first symbol belongs to the first symbol subset is related to the K.

As one embodiment, the second node is a base station device.

As one embodiment, the second node is user equipment.

As one embodiment, the second node is a relay node device.

As one embodiment, the second transmitter 1301 comprises at least one of {an antenna 420, a transmitting device 418, a transmitting processor 416, a multi-antenna transmitting processor 471, a controller/processor 475, and a memory 476} in Embodiment 4.

As one embodiment, the second receiver 1302 comprises at least one of {an antenna 420, a receiving device 418, a receiving processor 470, a multi-antenna receiving processor 472, a controller/processor 475, and a memory 476} in Embodiment 4.

Those skilled in the art will appreciate that all or some of the steps in the above-mentioned method may be implemented by instructing relevant hardware by a program, where the program can be stored in a computer-readable storage medium, such as a read-only memory, a hard disk or an optical disk, etc. Optionally, all or some of the steps of the above-mentioned embodiments may also be implemented using one or more integrated circuits. Correspondingly, each module unit in the above-mentioned embodiment can be implemented either in a hardware form or as software functional modules. The present application is not limited to any specific combination form of hardware and software. The user equipment, terminals and UE in the present application include but are not limited to: drones, communication modules on drones, remote-controlled aircrafts, aircrafts, small aircrafts, mobile phones, tablet computers, notebooks, in-vehicle communication devices, transportation tools, vehicles, RSUs, wireless sensors, data cards, Internet of Things terminals, RFID (Radio Frequency Identification) terminals, NB-IOT (Narrow Band Internet of Things) terminals, MTC (Machine Type Communication) terminals,eMTC (enhanced MTC) terminals, data cards, data cards, in-vehicle communication devices, low-cost mobile phones, low-cost tablet computers, and other wireless communication devices. The base station or system equipment in the present application includes but is not limited to: macro base stations, micro base stations, small base stations, home base stations, relay base stations, eNB (evolved Node B), gNB, TRP, GNSS (Global Navigation Satellite System), relay satellites, satellite base stations, airborne base stations, RSU, drones, testing devices, such as transceiver apparatuses or signaling test instruments that simulate partial base station functions, and other wireless communication devices.

Those skilled in the art will appreciate that the present invention may be practiced in other designated forms without departing from its core or basic features. Therefore, the currently disclosed embodiments should be regarded as descriptive and not restrictive in any way. The scope of the present invention is determined by the appended claims rather than the foregoing description, and all modifications within their equivalent meanings and areas are considered to have been included therein.

## Claims

1. A first node for wireless communication, comprising:
a first receiver for receiving first signaling, the first signaling being used for determining a first symbol set, the first symbol set comprising at least one symbol, and
a first transmitter for transmitting a first signal in a first symbol subset, any symbol in the first symbol subset being a symbol in the first symbol set,
wherein, a first symbol is a symbol in the first symbol set, the first symbol being a first-type symbol, and whether the first symbol belongs to the first symbol subset is related to at least one of the following:
whether the first node monitors a PDCCH in the first symbol, and
whether the first signal is assigned in the first symbol at least one RE belonging to a first RE set, the first RE set comprising at least one RE.

2. The first node according to claim 1, wherein the first receiver receives a first information block, wherein, the first information block indicates which symbol or which symbols in the first symbol set is or are the first-type symbol(s).

3. The first node according to claim 1 or 2, wherein the first receiver receives a second information block, wherein, the second information block is used for determining whether the first node monitors the PDCCH in the first symbol.

4. The first node according to any one of claims 1 to 3, wherein the first receiver receives a third information block, wherein, the third information block is used for determining the first RE set.

5. The first node according to claim 4, wherein the first symbol set comprises M symbols, M being a positive integer greater than 1, the third information block indicates M type sets, any type set in the M type sets comprising P types, the M type sets respectively comprise types of the M symbols in P subbands, P being a positive integer greater than 1, and the M type sets are used for determining the first RE set.

6. The first node according to any one of claims 1 to 5, wherein only when a first condition is satisfied, whether the first symbol belongs to the first symbol subset is related to at least one of the following:
whether the first node monitors a PDCCH in the first symbol, and
whether the first signal is assigned in the first symbol at least one RE belonging to the first RE set.

7. The first node according to any one of claims 1 to 6, wherein whether the first symbol belongs to the first symbol subset is related to whether the first signal is assigned in the first symbol at least one RE belonging to the first RE set, and when the first signal is assigned in the first symbol K REs belonging to the first RE set, whether the first symbol belongs to the first symbol subset is related to the K.

8. A second node for wireless communication, comprising:
a second transmitter for transmitting first signaling, the first signaling being used for determining a first symbol set, the first symbol set comprising at least one symbol, and
a second receiver for receiving a first signal in a first symbol subset, any symbol in the first symbol subset being a symbol in the first symbol set,
wherein, a first symbol is a symbol in the first symbol set, the first symbol being a first-type symbol, and whether the first symbol belongs to the first symbol subset is related to at least one of the following:
whether a sender of the first signal monitors a PDCCH in the first symbol, and
whether the first signal is assigned in the first symbol at least one RE belonging to a first RE set, the first RE set comprising at least one RE.

9. The second node according to claim 8, wherein the second transmitter transmits a first information block, wherein, the first information block indicates which symbol or which symbols in the first symbol set is or are the first-type symbol(s).

10. The second node according to claim 8 or 9, wherein the second transmitter transmits a second information block, wherein, the second information block is used for determining whether the sender of the first signal monitors the PDCCH in the first symbol.

11. The second node according to any one of claims 8 to 10, wherein the second transmitter transmits a third information block, wherein, the third information block is used for determining the first RE set.

12. The second node according to claim 11, wherein the first symbol set comprises M symbols, M being a positive integer greater than 1, the third information block indicates M type sets, any type set in the M type sets comprising P types, the M type sets respectively comprise types of the M symbols in P subbands, P being a positive integer greater than 1, and the M type sets are used for determining the first RE set.

13. The second node according to any of claims 8 to 12, wherein only when a first condition is satisfied, whether the first symbol belongs to the first symbol subset is related to at least one of the following:
whether the sender of the first signal monitors the PDCCH in the first symbol, and
whether the first signal is assigned in the first symbol at least one RE belonging to the first RE set.

14. The second node of any of claims 8 to 13, wherein whether the first symbol belongs to the first symbol subset is related to whether the first signal is assigned in the first symbol at least one RE belonging to the first RE set, and when the first signal is assigned in the first symbol K REs belonging to the first RE set, whether the first symbol belongs to the first symbol subset is related to the K.

15. A method for use in a first node for wireless communication, comprising:
receiving first signaling, the first signaling being used for determining a first symbol set, the first symbol set comprising at least one symbol, and
transmitting a first signal in a first symbol subset, any symbol in the first symbol subset being a symbol in the first symbol set,
wherein, a first symbol is a symbol in the first symbol set, the first symbol being a first-type symbol, and whether the first symbol belongs to the first symbol subset is related to at least one of the following:
whether the first node monitors a PDCCH in the first symbol, and
whether the first signal is assigned in the first symbol at least one RE belonging to a first RE set, the first RE set comprising at least one RE.

16. The method according to claim 15, comprising:
receiving a first information block,
wherein, the first information block indicates which symbol or which symbols in the first symbol set is or are the first-type symbol(s).

17. The method according to claim 15 or 16, comprising:
receiving a second information block,
wherein, the second information block is used for determining whether the first node monitors the PDCCH in the first symbol.

18. The method according to any one of claims 15 to 17, comprising:
receiving a third information block,
wherein, the third information block is used for determining the first RE set.

19. The method according to claim 18, wherein the first symbol set comprises M symbols, M being a positive integer greater than 1, the third information block indicates M type sets, any type set in the M type sets comprising P types, the M type sets respectively comprise types of the M symbols in P subbands, P being a positive integer greater than 1, and the M type sets are used for determining the first RE set.

20. The method according to any one of claims 15 to 19, wherein only when a first condition is satisfied, whether the first symbol belongs to the first symbol subset is related to at least one of the following:
whether the first node monitors a PDCCH in the first symbol, and
whether the first signal is assigned in the first symbol at least one RE belonging to the first RE set.

21. The method according to any one of claims 15 to 20, wherein whether the first symbol belongs to the first symbol subset is related to whether the first signal is assigned in the first symbol at least one RE belonging to the first RE set, and when the first signal is assigned in the first symbol K REs belonging to the first RE set, whether the first symbol belongs to the first symbol subset is related to the K.

22. A method for use in a second node for wireless communication, comprising:
transmitting first signaling, the first signaling being used for determining a first symbol set, the first symbol set comprising at least one symbol, and
receiving a first signal in a first symbol subset, any symbol in the first symbol subset being a symbol in the first symbol set,
wherein, a first symbol is a symbol in the first symbol set, the first symbol being a first-type symbol, and whether the first symbol belongs to the first symbol subset is related to at least one of the following:
whether a sender of the first signal monitors a PDCCH in the first symbol, and
whether the first signal is assigned in the first symbol at least one RE belonging to a first RE set, the first RE set comprising at least one RE.

23. The method according to claim 22, comprising:
transmitting a first information block,
wherein, the first information block indicates which symbol or which symbols in the first symbol set is or are the first-type symbol(s).

24. The method according to claim 22 or 23, comprising:
transmitting a second information block,
wherein, the second information block is used for determining whether the sender of the first signal monitors the PDCCH in the first symbol.

25. The method according to any one of claims 22 to 24, comprising:
transmitting a third information block,
wherein, the third information block is used for determining the first RE set.

26. The method according to claim 25, wherein the first symbol set comprises M symbols, M being a positive integer greater than 1, the third information block indicates M type sets, any type set in the M type sets comprising P types, the M type sets respectively comprise types of the M symbols in P subbands, P being a positive integer greater than 1, and the M type sets are used for determining the first RE set.

27. The method according to any one of claims 22 to 26, wherein only when a first condition is satisfied, whether the first symbol belongs to the first symbol subset is related to at least one of the following:
whether the sender of the first signal monitors the PDCCH in the first symbol, and
whether the first signal is assigned in the first symbol at least one RE belonging to the first RE set.

28. The method according to any one of claims 22 to 27, wherein whether the first symbol belongs to the first symbol subset is related to whether the first signal is assigned in the first symbol at least one RE belonging to the first RE set, and when the first signal is assigned in the first symbol K REs belonging to the first RE set, whether the first symbol belongs to the first symbol subset is related to the K.
